(19) Europäisches Patentamt / European Patent Office / Office européen des brevets

(11) **EP 2 521 278 A1**

(12) **EUROPEAN PATENT APPLICATION**
published in accordance with Art. 153(4) EPC

(43) Date of publication:
**07.11.2012 Bulletin 2012/45**

(51) Int Cl.:
**H04B 7/00** (2006.01)

(21) Application number: **09852714.6**

(22) Date of filing: **28.12.2009**

(86) International application number:
**PCT/CN2009/076145**

(87) International publication number:
**WO 2011/079429 (07.07.2011 Gazette 2011/27)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(71) Applicant: **Fujitsu Limited**
**Kawasaki-shi, Kanagawa 211-8588 (JP)**

(72) Inventors:
• **WANG, Jian**
  **Beijing 100025 (CN)**
• **ZHOU, Hua**
  **Beijing 100025 (CN)**
• **WU, Jianming**
  **Beijing 100025 (CN)**

(74) Representative: **Ward, James Norman et al**
**Haseltine Lake LLP**
**Lincoln House, 5th Floor**
**300 High Holborn**
**London WC1V 7JH (GB)**

(54) **METHOD AND DEVICE FOR GENERATING PRECODING MATRIX CODEBOOK**

(57) A method for generating precoding matrix codebooks for a communication system is provided in the invention, and the method includes: determining at least one correlation antenna group formed by antenna units with correlation of predefined degree among multiple antenna units in the communication system (S110); selecting at least one correlation antenna group from the determined correlation antenna groups, and processing the precoding matrices corresponding to the selected correlation antenna groups, so that, for each selected correlation antenna group, the processed precoding matrix respectively corresponding to each antenna unit of the selected correlation antenna groups has symmetry (S120). A device for creating precoding matrix codebooks for communication systems, a base station and a mobile teminal having this device are also provided in the invention. By applying the precoding matrix codebook created by using above method and device, the complexity of the operation for creating and selecting precoding matrix codebooks can be greatly decreased, and moreover performance of communication system can be still optimized.

Fig.1

EP 2 521 278 A1

**Description**

**Field of the Invention**

The invention generally relates to the technical field of wireless communication, and more specifically to a method and device for generating precoding matrix codebook for use in multiple antenna communication system, and a base station and mobile station capable of generating precoding matrix codebook.

**Background of the Invention**

Until now, the wireless communication system has been developed rapidly. The previous second-generation mobile communication system, i.e., Global Mobile Communications (GSM) system has continuously been evolved toward techniques such as the General Packet Radio Service (GPRS) and Enhanced Data rates GSM evolution (EDGE), improving greatly data transmission capacity of the system. The third generation mobile communication system with higher transmission rate, for example, Wideband Code Division Multiple Address (WCDMA), CDMA 2000, has been deployed in commercial use in many countries and regions worldwide. In the development of cellular technology, other wireless access technologies such as wireless LAN (WLAN) and Microwave Access Worldwide Interoperability (WiMAX) technology have also been developed rapidly. In addition, projects such as IEEE 802.16m technology orienting fourth-generation mobile communication system and the Third Generation Partnership Project Long Term Evolution (3GPP LTE), the Third Generation Partnership Project evolution-advanced (3GPP LTE-Advanced,) have been initiated into a development stage.

With the rapid growth of demands on high-speed multimedia communications and high-speed wireless Internet access business, and limited radio spectrum resources, it is a problem that needs to be solved urgently to improve sufficiently transmission rate and spectrum utilizing efficiency of the communication system by using the current frequency band resources. Considering that the multi-antenna technology can improve the transmission capacity or signal quality, the above various systems use multi-antenna technology, and an antenna pattern of 8 transmitting antennas and 8 receiving antennas from base station to mobile station is even defined in the 3GPP LTE-Advanced system and IEEE 802.16m.

Multiple-Input Multiple-Output (MIMO) system belongs to a multi antenna system, being a wireless communication system performing data transmission using multiple transmitting antennas and multiple receiving antennas, supporting parallel data stream transmission, capable of providing high data rate and large throughput and greater communication distance, and has become one of concerned key technologies in academic research and practical system. Through ongoing development in recent years, MIMO technique has been increasingly used in various wireless communication systems. In terms of the wireless broadband mobile communication system, content relative to MIMO technique has been added to the standard of 3GPP. Meanwhile, MIMO has become a hot technique in the fourth generation (4G) communication, and become a key part in almost all new wireless standards (such as HSDPA, 802.11n, 802.16e, 802.10, 802.20, etc.).

Usually, an independent forward error correction code encoding is first performed on parallel data streams in multi-antenna transmission, and then the code word after encoding is mapped to one or more transmission layers. When the code word is mapped to multiple transport layers, it is sufficient to series-parallel transform the serial data output from the encoder into corresponding multiple layers. In one transmission, the number of all the layers supported by the system is also referred to as Rank of the system.

Generally, the number of the transmission layers or Rank supported by the multi antenna system is smaller than or equal to the number of the physical antennas of the multi antenna system. The process of converting data on various layers into data on various physical antennas is referred to as a precoding process of the signal. Particularly, the process of converting data on various layers into data on various physical antennas by using linear operation is referred to as a linear precoding process of the signal. In the current wireless communication system such as LTE system and WiMax system, due to computation complexity and signaling control complexity of the system, a certain number of precoding matrices need to be preset for the system. A set of precoding matrix is referred to as a precoding matrix codebook, and the number of precoding matrix in the precoding matrix codebook is referred to as the size of the precoding matrix codebook. In multi antenna system, the precoding matrix codebook, including size of the precoding matrix codebook and element of the precoding matrix code book, influences directly indexes of the system such as the throughput. Therefore, to meet requirements of improving the throughput of the system, precoding matrix codebook of the multi antenna system including size of the precoding matrix codebook and precoding matrix elements in precoding matrix codebook needs to be well-designed.

## Summary of the Invention

A brief outline of the invention is provided below. Since it is an outline to be provided, there is necessarily a case of simplifying, generalizing and details omitting. Those skilled in the art should understand that the outline is only for explaining the disclosure, and shall not be regarded as any limitation to the disclosure. Other aspects, features and advantages of the device and/or method and/or other subjects provided in the Description will become clear from the description of the Description. The outline section is used to prelude a plurality of concepts that will be further described in the Detailed Embodiments in a simplified form. The outline section is neither for determining key features or necessary features of the claimed subject matter, nor is it an auxiliary means for determining a scope of the claimed subject matter.

According to an embodiment of the invention, there is provided a method of generating a precoding matrix codebook for a communication system, comprising:

determining at least one correlated antenna group formed by antenna units with a predefined degree of correlation among a plurality of antenna units in the communication system; and

selecting at least one correlated antenna group from the determined correlated antenna groups, and processing precoding matrices corresponding to the selected correlated antenna group, so that for each selected correlated antenna group, the processed precoding matrix respectively corresponding to each antenna unit of the selected correlated antenna groups has symmetry.

According to an embodiment of the invention, there is provided a device for generating a precoding matrix codebook for use in a communication system, comprising:

a correlated antenna determining unit configured to determine at least one correlated antenna group formed by antenna units with a predefined degree of correlation among a plurality of antenna units in the communication system; and

a precoding matrix processing unit configured to select at least one correlated antenna group from the determined correlated antenna groups, and process precoding matrices corresponding to the selected correlated antenna groups, so that for each selected correlated antenna group, the processed precoding matrix respectively corresponding to each antenna unit of the selected correlated antenna groups has symmetry.

The precoding matrix codebook generated by the method and device according to embodiments of the invention performs corresponding process on possible precoding matrices based on a property of a signal related to antenna unit, so as to obtain the best precoding matrix, such that behavior parameter (for example, the system throughput, etc.) of the communication system is optimized, and to reduce the block error ratio (BLER) for a fixed coding modulation scheme. Moreover, processes such as generation and selection of the preceding matrix codebook may be simplified significantly to reduce efficiently system operation cost.

According to an embodiment of the invention, there is provided a base station, the base station being equipped with the device for generating a precoding matrix codebook for a communication system according to the invention, thereby capable of implementing the above method of generating a precoding matrix codebook for a communication system according to the invention.

According to an embodiment of the invention, there is provided a mobile terminal, the mobile terminal being equipped with the above device for generating a precoding matrix codebook for a communication system according to the invention, thereby implementing the above method of generating a precoding matrix codebook for a communication system according to the invention.

According to an embodiment of the invention, there is provided a communication system, the communication system comprising the above base station and/or the mobile terminal according to embodiments of the invention, thereby implementing the above method of generating a precoding matrix codebook for a communication system according to the invention.

According to an embodiment of the invention, there is further provided a storage medium. The storage medium comprises a machine readable program code, which when being executed on the machine (for example, information processing device), causes the machine to execute the above method of generating a precoding matrix codebook for a communication system according to an embodiment of the invention.

According to an embodiment of the invention, there is further provided a program product. The program product comprises a machine executable instruction, which when being executed on the machine (for example, information processing device), causes the machine to execute the above method of generating a precoding matrix codebook for a communication system according to an embodiment of the invention.

**Brief Description of the Drawings**

Referring to the explanations of the present invention provided in conjunction with the drawings, the above and other objects, features and advantages of the present invention will be better understood. In the drawings, the same or similar technical features or components are represented by the same or similar reference signs. In the drawings:

Figure 1 shows a simple flow chart of the method of generating precoding matrix codebook for use in a communication system according to an embodiment of the invention;

Figure 2 shows a simple view of a possible antenna configuration in a MIMO communication system with 4 transmitting antennas;

Figure 3 shows a schematic block diagram of a device for generating precoding matrix codebook for use in a communication system according to an embodiment of the invention;

Figure 4 shows a schematic block diagram of a computer for implementing the method and device according to embodiments of the invention.

**Detailed Description of the Invention**

Exemplary embodiments of the invention will be described by referring to the drawings. For the sake of clearness and conciseness, not all features of the actual embodiments are described in the Description. However, it shall be understood that decisions specific to embodiment have to be made in a procedure of developing such an actual embodiment to achieve the specific object of the developer, for example, complying with limiting conditions relevant to system and transaction, which limiting conditions may change in different embodiments. In addition, it shall be understood that although the developing task may be complex and time consuming, such a developing is only a routine for those skilled in the art benefiting from the disclosure of the invention.

It shall be noted that, to avoid blurring of the invention due to unnecessary details, only device structure and/or process step closely related to the solution of the invention is illustrated in the Drawings, and other details not closely related to the invention are omitted.

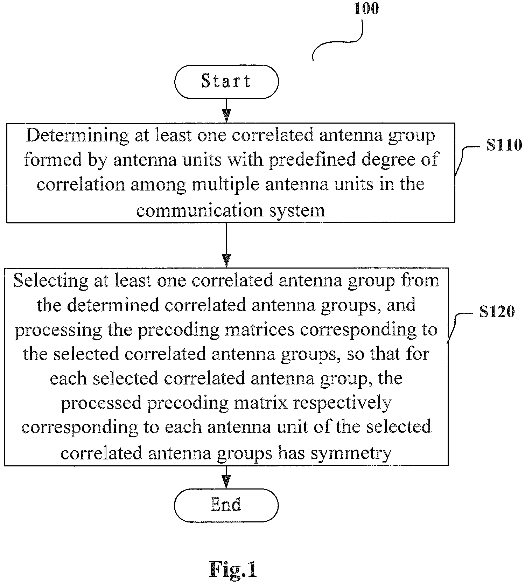

Figure 1 shows a simple flow chart of the method of generating precoding matrix codebook for use in a communication system according to an embodiment of the invention. As shown in Figure 1, firstly, at S110, at least one correlated antenna group formed by antenna units with a predefined degree of correlation among a plurality of antenna units in the communication system is determined. Next, at S120, at least one correlated antenna group from the determined correlated antenna groups is selected, and the precoding matrices corresponding to the selected correlated antenna groups are processed, so that for each selected correlated antenna group, the processed precoding matrix respectively corresponding to each antenna unit of the selected correlated antenna groups has symmetry.

In a specific embodiment of the method of generating precoding matrix codebook shown in Figure 1, a property of a signal received or transmitted by the antenna unit is used as a measuring index for determining a correlated antenna group with a predefined degree of correlation among a plurality of antenna units. Specifically, whether a corresponding antenna unit belongs to the same correlated antenna group may be determined according to a correlation degree of a statistical property of a signal received or transmitted by the antenna unit. A criteria for determining a correlated antenna group is preset, for example, it may be set that if a statistical property of a signal transmitted or received by the antenna unit is the same or a difference of the statistical property of the signal is within a predetermined range (for example, smaller than or equal to a predetermined threshold value, for example 10%), the statistical property of the signal is regarded as having a predetermined degree of correlation, and thus a corresponding antenna unit has also a predetermined degree of correlation, and thus it can be determined that the corresponding antenna unit is a correlated antenna unit, that is, belonging to the same correlated antenna group. It is easily understood that the antenna unit mentioned here may include single antenna, or include multiple antennas, which depends upon specific configurations of the system, and the manner of determining the correlated antenna group is similar no matter what configurations of the antenna units are used.

In one example, the statistical property of the signal for determining the correlated antenna group may comprise: mean, variance, distribution function, autocorrelation function, cross-correlation function, etc., which are described below one by one.

For a randomly changing signal, a statistical value of the signal is usually used to represent properties of the signal. A simple example is the AWGN signal, that is, additive white Gaussian noise signal. For the AWGN signal, properties of the signal are represented by a statistical amount-mean $\mu$ (for example, arithmetic mean) and a statistical amount-variance $\sigma^2$. If there are AWGN signals n(1) and n(2), and means $\mu_1$, $\mu_2$ and variances $\sigma_1^2$, $\sigma_2^2$ for both of the signals are identical, it is deemed that the statistical properties of the two random signals are the same, that is, having a predetermined degree of correlation. Similarly, if a difference between means $\mu_1$, $\mu_2$ and/or a difference between variances $\sigma_1^2$, $\sigma_2^2$ of the two signals are within a predetermined range, it can also be deemed that the two signals have a predetermined degree of correlation.

Generally, for a random signal, statistical distribution of the signal may be used to represent the properties of the signal. For example, for Rayleigh fading signal, real and virtual parts of the signal are both normal distribution signals, and the real part and the virtual part of the signal are not correlated. The amplitude of the Rayleigh fading signal complies with Rayleigh distribution, the phase angel of the Rayleigh fading signal complies with a uniform distribution of [0,2 $\pi$]. If there are signals m(1) and m(2), the statistical distribution of both are the same or a difference between the statistical distribution of the signals is within a predetermined range, it may be deemed that the statistical properties of the signals m(1) and m (2) have a predetermined degree of correlation.

In addition, properties of the random signal may be represented by the autocorrelation function and the cross-correlation function. For example, for random signal x1(t), x2(t),

The autocorrelation function is defined as:

$$R_{x1}(\tau) = \int_{-\infty}^{+\infty} x_1(t) \cdot x_1(t-\tau)^* dt \quad \text{(formula 1)}$$

$$R_{x2}(\tau) = \int_{-\infty}^{+\infty} x_2(t) \cdot x_2(t-\tau)^* dt \quad \text{(formula 2)}$$

The cross-correlation function is defined as:

$$R_{x1,x2}(\tau) = \int_{-\infty}^{+\infty} x_1(t) \cdot x_2(t-\tau)^* dt \quad \text{(formula 3)}$$

$$R_{x2,x1}(\tau) = \int_{-\infty}^{+\infty} x_2(t) \cdot x_1(t-\tau)^* dt \quad \text{(formula 4)}$$

Wherein, t is representative of time, $\tau$ is representative of a correlation time, * is representative of a conjugate operation.

If there are signals y1(t), y2(t), their autocorrelation function and cross-correlation functions may be obtained similarly by the above formulae 1-4. If autocorrelation function and cross-correlation function of signals y1(t), y2(t) and signals x1(t) and x2(t) are the same, that is,

$$R_{y1}(\tau) = R_{x1}(\tau) , R_{y2}(\tau) = R_{x2}(\tau)$$

and

$$R_{y1,y2}(\tau) = R_{x1,x2}(\tau) , R_{y2,y1}(\tau) = R_{x2,x1}(\tau)$$

then it is deemed that random signals y1(t), y2(t) and random signals x1(t), x2(t) have the same statistical properties, that is, having a predetermined degree of correlation. Similarly, if a reference between autocorrelation function and cross-correlation of random signals y1(t), y2(t) and random signals x1(t), x2(t) is within a predetermined range, it may also be deemed that random signals y1(t), y2(t) and random signals x1(t), x2(t) have a predetermined degree of correlation.

As a specific example of various methods of representing and measuring statistical property of a signal, for example reference may be made to Wireless Communications: Principles and Practice, Second Edition , Prentice Hall PTR, ISBN: 7121026589 authored by Theodore S. Rappaport (America) to obtain related specific details.

As can be seen from the above, mean, variance, distribution function, autocorrelation function, cross-correlation function can all be utilized to represent statistical properties of the random signal. The statistical property of the random signal is a reflection of nature of the signal. Therefore, if two or more random signals have the same statistical property, it may be deemed that the two or more random signals have the same nature; if a difference between two or among more random signals is within a predetermined range, it may be deemed that the difference in nature of the two or more random signals is small. The above two cases may both be regarded as that the statistical properties of the two or more random signals have a predetermined degree of correlation or the natures of the signals have a predetermined degree of correlation. Since a correlated antenna group is determined according to correlation of a statistical property of a signal, subsequent process of precoding matrix performed for the determined correlated antenna group may optimize behavior of the communication system in aspect related to property of the signal, for example, improving throughput, block error ratio, etc. of the communication system.

Of course, those skilled in the art should appreciate that any of the above manners or any combination of the above manners of determining statistical properties of the signal may be used to determine a correlated antenna group, that is, the correlated antenna group may be determined by at least one of the above manners of determining statistical character of the signal as practically required. In addition, expect for the above example, a correlation degree of signal nature may be measured by any other appropriate methods.

In the specific embodiment of the method of generating precoding matrix codebook according to the embodiment of the invention shown in Fig.1, during processing a precoding matrix corresponding to the selected correlated antenna group, for each selected correlated antenna group, in the event that at least one precoding matrix corresponding to the antenna unit is removed from one antenna unit included in the selected correlated antenna group, the same number of symmetrical precoding matrix are respectively removed from precoding matrices corresponding to each antenna unit of other antenna units contained in the selected correlated antenna group. The symmetrical precoding matrix mentioned here has the same subject elements as the at least one precoding matrix removed from the one antenna unit.

As stated above, in the method of generating a precoding matrix codebook according to an embodiment of the invention, precoding matrix corresponding to each antenna unit contained in the selected correlated antenna group is processed correspondingly in such a manner that processed precoding matrix corresponding to each antenna unit in the selected correlated antenna group has symmetry. The socalled "having symmetry" may refer to at least one of the following: the processed precoding matrix corresponding to a corresponding antenna unit has symmetry in terms of matrix structure configuration; influence incurred by precoding process by using the processed precoding matrix on the behavior of the communication system is symmetrical, that is, influence on the behavior of the communication system is the same or similar.

In the specific embodiment, for a selected correlated antenna group, by removing precoding matrix having the same number and having the same subject elements from precoding matrices corresponding to each antenna unit contained in the correlated antenna group, the processed precoding matrices corresponding to each antenna unit have symmetry. The subject element may refer to an element which dominates in the precoding matrix, taking a leading part in determining the nature of the precoding matrix. Since influences incurred by precoding matrix having symmetry on the communication system are the same or similar, the precoding matrix codebook obtained in such a manner may optimize the behavior of the communication system, for example, improving throughput of the communication system, etc.

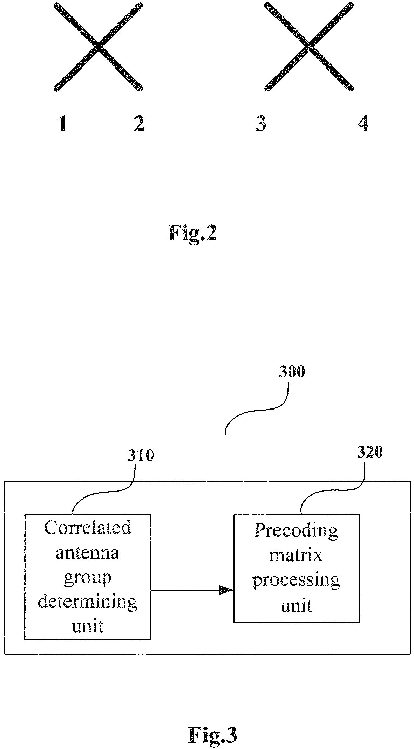

A specific example of the method of generating a precoding matrix according to an embodiment of the invention shown in Figure 1 is descried in detail below. In the example, an uplink cubic metric preserve (CMP) precoding matrix codebook for MIMO system is generated. It is well known that Cubic Metric (CM) is a parameter used in 3GPP-LTE standard for directly representing a reduction in power efficiency of an uplink power amplifier (or Power De-Reting). Figure 2 shows a simple view of an antenna configuration of the communication terminal included in the MIMO system. As shown in Figure 2, antennas 1 and 2 are in cross-polarization configuration, and antennas 3 and 4 are in cross-polarization configuration. In case of cross-polarization configuration of antenna, the CMP precoding codebook based on the QPSL constellation points and whose Rank is 3 may include 24 precoding matrices in total. For example, antennas 1-4 may constitute $C_4^2 = 6$ antenna units, that is, a first antenna unit {1, 2}, a second antenna unit{1, 3}, a third antenna unit{1, 4}, a fourth antenna unit{2, 3}, a fifth antenna unit(2, 4), and a six antenna unit{3, 4}, wherein each antenna unit corresponds to 4 precoding matrices. Taking the first antenna unit {1, 2} as an example, the precoding matrix corresponding to the firs antenna unit is as follows:

$$\begin{bmatrix} 1 & 0 & 0 \\ 1 & 0 & 0 \\ 0 & 1 & 0 \\ 0 & 0 & 1 \end{bmatrix}, \begin{bmatrix} 1 & 0 & 0 \\ -1 & 0 & 0 \\ 0 & 1 & 0 \\ 0 & 0 & 1 \end{bmatrix}, \begin{bmatrix} 1 & 0 & 0 \\ j & 0 & 0 \\ 0 & 1 & 0 \\ 0 & 0 & 1 \end{bmatrix}, \begin{bmatrix} 1 & 0 & 0 \\ -j & 0 & 0 \\ 0 & 1 & 0 \\ 0 & 0 & 1 \end{bmatrix}$$

Wherein, the first to second elements {1, 1}, {1, -1}, {1, j} and {1, -j} in a first column of each precoding matrix are called as subject elements of each corresponding precoding matrix, $\pm 1$ and $\pm j$ correspond to. QPSK modulation.

Similarly, each of the 4 precoding matrices corresponding to the sixth antenna unit{3, 4} arranges its subject elements{1, 1}, {1, -1}, {1, j} and {1, -j} in third and fourth row in the first column, shown as follows:

$$\begin{bmatrix} 0 & 1 & 0 \\ 0 & 0 & 1 \\ 1 & 0 & 0 \\ 1 & 0 & 0 \end{bmatrix}, \begin{bmatrix} 0 & 1 & 0 \\ 0 & 0 & 1 \\ 1 & 0 & 0 \\ -1 & 0 & 0 \end{bmatrix}, \begin{bmatrix} 0 & 1 & 0 \\ 0 & 0 & 1 \\ 1 & 0 & 0 \\ j & 0 & 0 \end{bmatrix}, \begin{bmatrix} 0 & 1 & 0 \\ 0 & 0 & 1 \\ 1 & 0 & 0 \\ -j & 0 & 0 \end{bmatrix}$$

and so on. Then 6*4=24 precoding matrices may be obtained for the above 6 antenna units, shown as follows.

4 precoding matrices corresponding to the second antenna unit{1, 3}, wherein subject elements{1, 1}, {1, -1}, {1, j} and {1, -j} are arranged in first and third rows in the first column respectively:

$$\begin{bmatrix} 1 & 0 & 0 \\ 0 & 1 & 0 \\ 1 & 0 & 0 \\ 0 & 0 & 1 \end{bmatrix}, \begin{bmatrix} 1 & 0 & 0 \\ 0 & 1 & 0 \\ -1 & 0 & 0 \\ 0 & 0 & 1 \end{bmatrix}, \begin{bmatrix} 1 & 0 & 0 \\ 0 & 1 & 0 \\ j & 0 & 0 \\ 0 & 0 & 1 \end{bmatrix}, \begin{bmatrix} 1 & 0 & 0 \\ 0 & 1 & 0 \\ -j & 0 & 0 \\ 0 & 0 & 1 \end{bmatrix}$$

4 precoding matrices corresponding to the third antenna unit {1, 4}, wherein subj ect elements {1, 1}, {1, -1}, {1, j} and {1, -j} are arranged in first and fourth rows in the first column respectively:

$$\begin{bmatrix} 1 & 0 & 0 \\ 0 & 1 & 0 \\ 0 & 0 & 1 \\ 1 & 0 & 0 \end{bmatrix}, \begin{bmatrix} 1 & 0 & 0 \\ 0 & 1 & 0 \\ 0 & 0 & 1 \\ -1 & 0 & 0 \end{bmatrix}, \begin{bmatrix} 1 & 0 & 0 \\ 0 & 1 & 0 \\ 0 & 0 & 1 \\ j & 0 & 0 \end{bmatrix}, \begin{bmatrix} 1 & 0 & 0 \\ 0 & 1 & 0 \\ 0 & 0 & 1 \\ -j & 0 & 0 \end{bmatrix}$$

4 precoding matrices corresponding to the fourth antenna unit{2, 3}, wherein subject elements {1, 1}, {1, -1}, {1, j} and {1, -j} are arranged in second and third rows in the first column respectively:

$$\begin{bmatrix} 0 & 1 & 0 \\ 1 & 0 & 0 \\ 1 & 0 & 0 \\ 0 & 0 & 1 \end{bmatrix}, \begin{bmatrix} 0 & 1 & 0 \\ 1 & 0 & 0 \\ -1 & 0 & 0 \\ 0 & 0 & 1 \end{bmatrix}, \begin{bmatrix} 0 & 1 & 0 \\ 1 & 0 & 0 \\ j & 0 & 0 \\ 0 & 0 & 1 \end{bmatrix}, \begin{bmatrix} 0 & 1 & 0 \\ 1 & 0 & 0 \\ -j & 0 & 0 \\ 0 & 0 & 1 \end{bmatrix}$$

4 precoding matrices corresponding to the fifth antenna unit{2, 4}, wherein subject elements {1, 1}, {1, -1}, {1, j} and {1, -j} are arranged in second and fourth rows in the second column respectively:

$$\begin{bmatrix} 0 & 1 & 0 \\ 1 & 0 & 0 \\ 0 & 0 & 1 \\ 1 & 0 & 0 \end{bmatrix}, \begin{bmatrix} 0 & 1 & 0 \\ 1 & 0 & 0 \\ 0 & 0 & 1 \\ -1 & 0 & 0 \end{bmatrix}, \begin{bmatrix} 0 & 1 & 0 \\ 1 & 0 & 0 \\ 0 & 0 & 1 \\ j & 0 & 0 \end{bmatrix}, \begin{bmatrix} 0 & 1 & 0 \\ 1 & 0 & 0 \\ 0 & 0 & 1 \\ -j & 0 & 0 \end{bmatrix}$$

It needs to be pointed out that the reference numbers for antennas and antenna units in the example are only for facilitating the description, and are not for limiting the invention. For example, different reference numbers are used to represent different antennas and antenna units, and are not used to indicate that those antennas or antenna units have an order or a size relation corresponding to the respective reference numbers. In addition, in the example, one antenna unit comprises two antennas, but those skilled in the art should understand that this does not limit the invention. Depending on the specific configuration of the system, one antenna unit may include one antenna or more than two antennas. The implementation of the method of generating precoding matrix codebook according to an embodiment of the invention is not affected by specific configuration the antenna unit.

It is prescribed in 3GPP relevant standard (see Final ReportWG1#58 v100.doc, http://www.3gpp.org/ftp/tsg ran/WG1 RL1/TSGR1 58/Report/) that the size of the CMP precoding codebook which is based on QPSK modulation and whose Rank is 3 in the cross-polarization antenna configuration shown in Figure 2 is 20. To obtain the precoding matrix codebook whose size is 20 as prescribed in 3GPP standard, 4 precoding matrices need to be removed from all possible 24 precoding matrices in the above cases. In case of arbitrary removing, $C_{24}^4 = 10626$ precoding matrix codebook with a size of 20 will be obtained. If precoding matrix codebook is selected arbitrarily from the possible 10626 codebooks for application in the system, the optimal behavior of the system can not be ensured. In addition, it is complex and time-consuming job to select a suitable precoding matrix codebook which makes the system have desired behavior from such a large number of codebooks, increasing cost of operating the communication system.

To this end, according to the example of the method of generating a precoding matrix according to an embodiment of the invention, a correlated antenna group may first be determined from the above 6 antenna units. For example, a correlated antenna group may be determined by the above method of determining correlation degree of the statistical property of a signal.

It can be found from the antenna configuration view shown in Figure 2 that the antenna 1 and the antenna 3 have the same polarization direction, and the antenna 2 and the antenna 4 have the same polarization direction. The 6 antenna units are analyzed by using the method of analyzing the statistical property of the signal, and then the following may be concluded.

The first antenna unit {1, 2} and the sixth antenna unit {3, 4} belong to the same correlated antenna group.

The first antenna unit {1, 2} and the sixth antenna unit {3, 4} have completely the same polarization direction, both being ±45 degrees, and the only difference is that the space positions of the two antenna units are different by λ/2, wherein λ is wavelength of the carrier wave of the wireless communication system. In an environment of wireless mobile communication, a space position difference of λ/2 influences only a transient property of the antenna unit {1, 2} and the antenna unit {3, 4}, and does not influence long term statistical properties in time. Therefore, the first antenna unit {1, 2} and the sixth antenna unit {3, 4} have the same statistical property, that is, have the same signal nature. As a matter of fact, the same conclusion can be obtained by using the above method of determining the statistical property of a signal, that is, mean, variance, distribution function, autocorrelation function, cross-correlation function of a signal transmitted or received by the first antenna unit {1, 2} and the sixth antenna unit {3, 4} are the same. According to this, it can be determined that the first antenna unit {1, 2} and the sixth antenna unit {3, 4} form a correlated antenna group.

The second antenna unit {1, 3} and the fifth antenna unit {2, 4} belong to the same correlated antenna group.

As can be seen from Figure 2, the second antenna unit {1, 3} and the fifth antenna unit {2, 4} have the same antenna distance, both being λ/2, and the only difference lies in the polarization direction of the two antenna units which are +45 and -45 degree, respectively. In accordance with the theories of the electromagnetic wave and the electromagnetic field, a polarization signal can be decomposed into vertical direction vector V and horizontal direction vector H. For the second antenna unit {1, 3} and the fifth antenna unit {2, 4}, the vertical direction vectors V thereof are completely the same, and the horizontal direction vectors H thereof are different by a minus sign, that is, by 180 degrees phase difference. For example, by the method of analyzing using the autocorrelation function and cross correlation function of the signal, it can be seen that a fixed phase difference does not affect the statistical property of the signal. Therefore, the second antenna unit {1, 3} and the fifth antenna unit {2, 4} have the same statistical property, that is, have the same signal nature. Similarly, by other methods of determining the statistical property of a signal, the same conclusion can be obtained, that is, mean, variance, distribution function of a signal transmitted or received by the second antenna unit {1, 3} and the fifth antenna unit {2, 4} are the same.

The antenna unit {1, 4} and the antenna unit {2, 3} belong to the same correlated antenna group.

As can be seen from Figure 2, the antenna unit {1, 4} and the antenna unit {2, 3} have the same antenna spacing, both being $\lambda$ /2, and the only difference lies in the polarization direction of the two antenna units which are {+45, -45 degree} and {-45, +45 degree}, respectively. As analyzed above, in accordance with the theories of the electromagnetic wave and the electromagnetic field, a polarization signal may be decomposed into vertical direction vector V and horizontal direction vector H. As to the antenna unit {1, 4} and the antenna unit {2, 3}, the vertical direction vectors V are completely the same, and the horizontal direction vectors H are different by a minus sign, that is, by 180 degrees phase difference. For example, by the method of analyzing using the autocorrelation function and cross correlation function of the signal, it can be seen that a fixed phase difference does not affect the statistical property of the signal. Therefore, the antenna unit {1, 4} and the antenna unit {2, 3} have the same statistical property, that is, have the same signal nature. Similarly, by other methods of determining the statistical property of a signal as described above, the same conclusion can be obtained, that is, mean, variance, distribution function of a signal transmitted or received by the antenna unit {1, 4} and the antenna unit {2, 3} are the same.

Although in the example the correlated antenna group is formed by antenna units having the same signal statistical properties, those skilled in the art should understand that in other examples, the correlated antenna group may be formed by antenna units having a difference of signal statistical property within a predetermined range.

It can be readily understood that since various antenna units included in the correlated antenna group have the same signal nature, if precoding matrices having the same subject elements are removed respectively from precoding matrices corresponding to those antenna units to make the obtained precoding matrixes have symmetry, it is possible to obtain a precoding codebook which affects optimally the system behavior (such as system throughput, block error ratio).

Take the correlation antenna unit {1, 2} and antenna unit {3, 4} as an example. If precoding matrix(es) corresponding to at least one subject elements of subject elements {1, 1}, {1, -1}, {1, j} and {1, -j} are removed from the antenna unit {1, 2}, the same number of precoding matrix(es) having the same subject element are also removed from antenna unit {3, 4}. For example, if a precoding matrix whose subject element is {1, 1} is removed from the antenna unit {1, 2}, a precoding matrix whose subject element is {1, 1} is correspondingly removed from the antenna unit {3, 4}. Thus 24 precoding matrices can be reduced to 22 precoding matrices. Then, two precoding matrices may be removed in a similar manner from precoding matrices corresponding to two antenna units included in any other correlated antenna group, obtaining a precoding matrix codebook with a size of 20. Of course, a precoding matrix corresponding to any two subject elements of subject elements {1, 1}, {1,-1}, {1, j} and {1, -j} can be removed from antenna unit {1, 2} and antenna unit {3, 4} simultaneously, thus reducing 24 precoding matrices to 20 precoding matrices, thereby obtaining a precoding matrix codebook with a size of 20 desired in the end.

In the example, the object is to obtain a precoding matrix codebook with a size of 20. However, if a precoding matrix codebook with other size is desired, it is easily set how many precoding matrices need to be removed from precoding matrices corresponding to each antenna unit included in one or a plurality of correlated antenna groups.

It can be seen from the above process that since the removed precoding matrix has the same subject element, after the corresponding precoding matrix is removed, precoding matrices corresponding to antenna unit {1, 2} and antenna unit {3, 4} in the correlated antenna group show a nature of symmetry, that is, the processed precoding matrix corresponding to the antenna unit {1, 2} and the antenna unit {3, 4} have the same subject element. In addition, as stated above, since antenna unit {1, 2} and antenna unit {3, 4} have the same signal nature, the precoding matrix codebook obtained by such a processing may bring about excellent quality to the communication system.

In an alternative embodiment, other correlated antenna groups, in this example the correlated antenna group formed of antenna unit {1, 3} and antenna unit {2, 4} and the correlated antenna group formed of antenna unit {1, 4} and antenna unit {2, 3}, may be processed similarly. For example, If one precoding matrix is removed firstly from each of the antenna unit {1, 2} and the antenna unit {3, 4}, two precoding matrices having the same subject element may be further removed from any of the correlated antenna group formed of antenna unit {1, 3} and antenna unit {2, 4} and the correlated antenna group formed of antenna unit {1, 4} and antenna unit {2, 3}, obtaining a precoding matrix codebook with a size of 20. Naturally, two precoding matrices having the same subject element may be further removed from precoding matrices corresponding to each antenna unit included in any correlated antenna group of the three correlated antenna groups, obtaining a precoding matrix codebook with a size of 20. Those skilled in the art may determine, from the specific requirements by system behavior, precoding matrix corresponding to antenna units included in which correlated antenna group is removed first, and precoding matrix corresponding to which subject element(s) is removed for each antenna unit, and the details are omitted here.

In accordance with the process of the above example, $C_3^1 * C_4^2 + C_3^2 * C_4^1 = 30$ precoding matrix codebooks with a size of 20 may be obtained in total, wherein $C_3^1 * C_4^2$ indicates removing two precoding matrices having the same subject element from precoding matrices corresponding to each antenna unit contained in one correlated antenna group, obtaining 18 precoding matrix codebooks with a size of 20, $C_3^2 * C_4^1$ indicates removing one precoding matrix having the same subject element from precoding matrices corresponding to each antenna unit contained in each correlated antenna group, for any two correlated antenna groups of the three correlated antenna groups, obtaining 12 precoding matrix codebooks with a size of 20, thereby obtaining 30 precoding matrix codebooks with a size of 20 in total.

As compared with the above-mentioned 10626 precoding matrix codebooks with a size of 20, it is obviously much simpler to generate 30 precoding matrix codebooks with a size of 20 and to select a codebook therefrom, such that system operation cost may be reduced significantly. On the other hand, the 30 codebooks are precoding matrix codebooks subjected to the above processing and thus can optimize system behavior, so application of the precoding matrix codebook selected therefrom to the communication system will result in optimal system behavior, for example, further improving throughput and block error ratio of the system.

Examples of several codebooks obtained by the method of generating precoding matrix of the example are given as follows:

Example 1:

Precoding matrix codebooks obtained by removing a precoding matrix whose subject elements are {1, j}, {1, -j} from antenna unit {1, 2} and antenna unit {3, 4}:

| **CMP Rank-3** codebook ■ size = 20 ■ power distribution matrix | $\Lambda = \begin{bmatrix} 1/2 & 0 & 0 \\ 0 & 1/2 & 0 \\ 0 & 0 & 1/2 \end{bmatrix}$ | | | |
|---|---|---|---|---|
| Index (serial number) 0 to 3 | $\begin{bmatrix} 1 & 0 & 0 \\ 1 & 0 & 0 \\ 0 & 1 & 0 \\ 0 & 0 & 1 \end{bmatrix}$ | $\begin{bmatrix} 1 & 0 & 0 \\ -1 & 0 & 0 \\ 0 & 1 & 0 \\ 0 & 0 & 1 \end{bmatrix}$ | $\begin{bmatrix} 1 & 0 & 0 \\ 0 & 1 & 0 \\ 1 & 0 & 0 \\ 0 & 0 & 1 \end{bmatrix}$ | $\begin{bmatrix} 1 & 0 & 0 \\ 0 & 1 & 0 \\ j & 0 & 0 \\ 0 & 0 & 1 \end{bmatrix}$ |
| Index 4 to 7 | $\begin{bmatrix} 1 & 0 & 0 \\ 0 & 1 & 0 \\ -1 & 0 & 0 \\ 0 & 0 & 1 \end{bmatrix}$ | $\begin{bmatrix} 1 & 0 & 0 \\ 0 & 1 & 0 \\ -j & 0 & 0 \\ 0 & 0 & 1 \end{bmatrix}$ | $\begin{bmatrix} 1 & 0 & 0 \\ 0 & 1 & 0 \\ 0 & 0 & 1 \\ 1 & 0 & 0 \end{bmatrix}$ | $\begin{bmatrix} 1 & 0 & 0 \\ 0 & 1 & 0 \\ 0 & 0 & 1 \\ j & 0 & 0 \end{bmatrix}$ |
| Index 8 to 11 | $\begin{bmatrix} 1 & 0 & 0 \\ 0 & 1 & 0 \\ 0 & 0 & 1 \\ -1 & 0 & 0 \end{bmatrix}$ | $\begin{bmatrix} 1 & 0 & 0 \\ 0 & 1 & 0 \\ 0 & 0 & 1 \\ -j & 0 & 0 \end{bmatrix}$ | $\begin{bmatrix} 0 & 1 & 0 \\ 1 & 0 & 0 \\ 1 & 0 & 0 \\ 0 & 0 & 1 \end{bmatrix}$ | $\begin{bmatrix} 0 & 1 & 0 \\ 1 & 0 & 0 \\ j & 0 & 0 \\ 0 & 0 & 1 \end{bmatrix}$ |
| Index 12 to 15 | $\begin{bmatrix} 0 & 1 & 0 \\ 1 & 0 & 0 \\ -1 & 0 & 0 \\ 0 & 0 & 1 \end{bmatrix}$ | $\begin{bmatrix} 0 & 1 & 0 \\ 1 & 0 & 0 \\ -j & 0 & 0 \\ 0 & 0 & 1 \end{bmatrix}$ | $\begin{bmatrix} 0 & 1 & 0 \\ 1 & 0 & 0 \\ 0 & 0 & 1 \\ 1 & 0 & 0 \end{bmatrix}$ | $\begin{bmatrix} 0 & 1 & 0 \\ 1 & 0 & 0 \\ 0 & 0 & 1 \\ j & 0 & 0 \end{bmatrix}$ |

(continued)

**CMP Rank-3** codebook

| Index 16 to 19 | | | |
|---|---|---|---|
| $\begin{bmatrix} 0 & 1 & 0 \\ 1 & 0 & 0 \\ 0 & 0 & 1 \\ -1 & 0 & 0 \end{bmatrix}$ | $\begin{bmatrix} 0 & 1 & 0 \\ 1 & 0 & 0 \\ 0 & 0 & 1 \\ -j & 0 & 0 \end{bmatrix}$ | $\begin{bmatrix} 0 & 1 & 0 \\ 0 & 0 & 1 \\ 1 & 0 & 0 \\ 1 & 0 & 0 \end{bmatrix}$ | $\begin{bmatrix} 0 & 1 & 0 \\ 0 & 0 & 1 \\ 1 & 0 & 0 \\ -1 & 0 & 0 \end{bmatrix}$ |

Example 2: Precoding matrix codebooks obtained by removing a precoding matrix whose subject elements are {1, j}, {1, -j} from antenna unit {1, 3} and antenna unit {2, 4}:

**CMP Rank-3** codebook
■ size = 20
■ power distribution matrix

$$\Lambda = \begin{bmatrix} \frac{1}{2} & 0 & 0 \\ 0 & \frac{1}{2} & 0 \\ 0 & 0 & \frac{1}{2} \end{bmatrix}$$

| Index 0 to 3 | | | |
|---|---|---|---|
| $\begin{bmatrix} 1 & 0 & 0 \\ 1 & 0 & 0 \\ 0 & 1 & 0 \\ 0 & 0 & 1 \end{bmatrix}$ | $\begin{bmatrix} 1 & 0 & 0 \\ -1 & 0 & 0 \\ 0 & 1 & 0 \\ 0 & 0 & 1 \end{bmatrix}$ | $\begin{bmatrix} 1 & 0 & 0 \\ 0 & 1 & 0 \\ 1 & 0 & 0 \\ 0 & 0 & 1 \end{bmatrix}$ | $\begin{bmatrix} 1 & 0 & 0 \\ j & 0 & 0 \\ 0 & 1 & 0 \\ 0 & 0 & 1 \end{bmatrix}$ |

| Index 4 to 7 | | | |
|---|---|---|---|
| $\begin{bmatrix} 1 & 0 & 0 \\ 0 & 1 & 0 \\ -1 & 0 & 0 \\ 0 & 0 & 1 \end{bmatrix}$ | $\begin{bmatrix} 1 & 0 & 0 \\ -j & 0 & 0 \\ 0 & 1 & 0 \\ 0 & 0 & 1 \end{bmatrix}$ | $\begin{bmatrix} 1 & 0 & 0 \\ 0 & 1 & 0 \\ 0 & 0 & 1 \\ 1 & 0 & 0 \end{bmatrix}$ | $\begin{bmatrix} 1 & 0 & 0 \\ 0 & 1 & 0 \\ 0 & 0 & 1 \\ j & 0 & 0 \end{bmatrix}$ |

| Index 8 to 11 | | | |
|---|---|---|---|
| $\begin{bmatrix} 1 & 0 & 0 \\ 0 & 1 & 0 \\ 0 & 0 & 1 \\ -1 & 0 & 0 \end{bmatrix}$ | $\begin{bmatrix} 1 & 0 & 0 \\ 0 & 1 & 0 \\ 0 & 0 & 1 \\ -j & 0 & 0 \end{bmatrix}$ | $\begin{bmatrix} 0 & 1 & 0 \\ 1 & 0 & 0 \\ 1 & 0 & 0 \\ 0 & 0 & 1 \end{bmatrix}$ | $\begin{bmatrix} 0 & 1 & 0 \\ 1 & 0 & 0 \\ j & 0 & 0 \\ 0 & 0 & 1 \end{bmatrix}$ |

| Index 12 to 15 | | | |
|---|---|---|---|
| $\begin{bmatrix} 0 & 1 & 0 \\ 1 & 0 & 0 \\ -1 & 0 & 0 \\ 0 & 0 & 1 \end{bmatrix}$ | $\begin{bmatrix} 0 & 1 & 0 \\ 1 & 0 & 0 \\ -j & 0 & 0 \\ 0 & 0 & 1 \end{bmatrix}$ | $\begin{bmatrix} 0 & 1 & 0 \\ 1 & 0 & 0 \\ 0 & 0 & 1 \\ 1 & 0 & 0 \end{bmatrix}$ | $\begin{bmatrix} 0 & 1 & 0 \\ 0 & 0 & 1 \\ 1 & 0 & 0 \\ j & 0 & 0 \end{bmatrix}$ |

(continued)

| CMP Rank-3 codebook | | | | |
|---|---|---|---|---|
| Index 16 to 19 | $\begin{bmatrix} 0 & 1 & 0 \\ 1 & 0 & 0 \\ 0 & 0 & 1 \\ -1 & 0 & 0 \end{bmatrix}$ | $\begin{bmatrix} 0 & 1 & 0 \\ 0 & 0 & 1 \\ 1 & 0 & 0 \\ -j & 0 & 0 \end{bmatrix}$ | $\begin{bmatrix} 0 & 1 & 0 \\ 0 & 0 & 1 \\ 1 & 0 & 0 \\ 1 & 0 & 0 \end{bmatrix}$ | $\begin{bmatrix} 0 & 1 & 0 \\ 0 & 0 & 1 \\ 1 & 0 & 0 \\ -1 & 0 & 0 \end{bmatrix}$ |

Example 3:

Precoding matrix codebooks obtained by removing a precoding matrix whose subj ect elements are {1, 1}, {1, -1} from antenna unit {1, 3} and antenna unit {2, 4}:

| CMP Rank-3 codebook ■ size = 20 ■ power distribution matrix | | | | |
|---|---|---|---|---|
| $$\Lambda = \begin{bmatrix} \frac{1}{2} & 0 & 0 \\ 0 & \frac{1}{2} & 0 \\ 0 & 0 & \frac{1}{2} \end{bmatrix}$$ | | | | |
| Index 0 to 3 | $\begin{bmatrix} 1 & 0 & 0 \\ 1 & 0 & 0 \\ 0 & 1 & 0 \\ 0 & 0 & 1 \end{bmatrix}$ | $\begin{bmatrix} 1 & 0 & 0 \\ -1 & 0 & 0 \\ 0 & 1 & 0 \\ 0 & 0 & 1 \end{bmatrix}$ | $\begin{bmatrix} 1 & 0 & 0 \\ 0 & 1 & 0 \\ j & 0 & 0 \\ 0 & 0 & 1 \end{bmatrix}$ | $\begin{bmatrix} 1 & 0 & 0 \\ j & 0 & 0 \\ 0 & 1 & 0 \\ 0 & 0 & 1 \end{bmatrix}$ |
| Index 4 to 7 | $\begin{bmatrix} 1 & 0 & 0 \\ 0 & 1 & 0 \\ -j & 0 & 0 \\ 0 & 0 & 1 \end{bmatrix}$ | $\begin{bmatrix} 1 & 0 & 0 \\ -j & 0 & 0 \\ 0 & 1 & 0 \\ 0 & 0 & 1 \end{bmatrix}$ | $\begin{bmatrix} 1 & 0 & 0 \\ 0 & 1 & 0 \\ 0 & 0 & 1 \\ 1 & 0 & 0 \end{bmatrix}$ | $\begin{bmatrix} 1 & 0 & 0 \\ 0 & 1 & 0 \\ 0 & 0 & 1 \\ j & 0 & 0 \end{bmatrix}$ |
| Index 8 to 11 | $\begin{bmatrix} 1 & 0 & 0 \\ 0 & 1 & 0 \\ 0 & 0 & 1 \\ -1 & 0 & 0 \end{bmatrix}$ | $\begin{bmatrix} 1 & 0 & 0 \\ 0 & 1 & 0 \\ 0 & 0 & 1 \\ -j & 0 & 0 \end{bmatrix}$ | $\begin{bmatrix} 0 & 1 & 0 \\ 1 & 0 & 0 \\ 1 & 0 & 0 \\ 0 & 0 & 1 \end{bmatrix}$ | $\begin{bmatrix} 0 & 1 & 0 \\ 1 & 0 & 0 \\ j & 0 & 0 \\ 0 & 0 & 1 \end{bmatrix}$ |
| Index 12 to 15 | $\begin{bmatrix} 0 & 1 & 0 \\ 1 & 0 & 0 \\ -1 & 0 & 0 \\ 0 & 0 & 1 \end{bmatrix}$ | $\begin{bmatrix} 0 & 1 & 0 \\ 1 & 0 & 0 \\ -j & 0 & 0 \\ 0 & 0 & 1 \end{bmatrix}$ | $\begin{bmatrix} 0 & 1 & 0 \\ 1 & 0 & 0 \\ 0 & 0 & 1 \\ j & 0 & 0 \end{bmatrix}$ | $\begin{bmatrix} 0 & 1 & 0 \\ 0 & 0 & 1 \\ 1 & 0 & 0 \\ j & 0 & 0 \end{bmatrix}$ |

(continued)

| **CMP Rank-3** codebook | | | | |
|---|---|---|---|---|
| Index 16 to 19 | $\begin{bmatrix} 0 & 1 & 0 \\ 1 & 0 & 0 \\ 0 & 0 & 1 \\ -j & 0 & 0 \end{bmatrix}$ | $\begin{bmatrix} 0 & 1 & 0 \\ 0 & 0 & 1 \\ 1 & 0 & 0 \\ -j & 0 & 0 \end{bmatrix}$ | $\begin{bmatrix} 0 & 1 & 0 \\ 0 & 0 & 1 \\ 1 & 0 & 0 \\ 1 & 0 & 0 \end{bmatrix}$ | $\begin{bmatrix} 0 & 1 & 0 \\ 0 & 0 & 1 \\ 1 & 0 & 0 \\ -1 & 0 & 0 \end{bmatrix}$ |

It needs to be noted that although the above 3 examples of precoding matrix codebooks are obtained by removing respectively two precoding matrices having the same subject element from precoding matrices corresponding to two antenna units included in one correlated antenna group, from the above detail description, those skilled in the art could readily obtain other codebooks in the above 30 precoding matrix codebooks with a size of 20. For example, by removing one precoding matrix having a subject element {1, j} (the third precoding matrix counted from the left in the 4 precoding matrices corresponding to the two antenna units listed above) from each of the antenna unit {1, 2} and antenna unit {3, 4} and then removing one precoding matrix (the fourth precoding matrix counted from the left in the 4 precoding matrices corresponding to the two antenna units listed above) having a subject element {1,-j} from each of antenna unit {1, 3} and antenna unit {2, 4}, one precoding matrix codebook with a size of 20 is obtained, and so on. Due to space limitations, the obtainable 30 precoding matrix codebooks with a size of 20 are not described one by one here.

Figure 3 shows a device 300 for generating a precoding matrix codebook for use in multi antenna communication system according to the embodiment of the invention. As shown in Figure 3, the device 300 comprises: a correlated antenna determining unit 310, configured to determine at least one correlated antenna group formed by antenna units with a predefined degree of correlation among a plurality of antenna units in the communication system; and precoding matrix processing unit 320 configured to select at least one correlated antenna group from the determined correlated antenna groups, and process precoding matrices corresponding to the selected correlated antenna groups, so that for each selected correlated antenna group, the processed precoding matrix respectively corresponding to each antenna unit of the selected correlated antenna groups has symmetry.

In a specific embodiment of the device 300 for generating a precoding matrix codebook for use in multi antenna communication system according to the embodiment of the invention shown in Figure 3, the correlated antenna determining unit 310 may be configured to determine an antenna unit which has the same statistics property of a signal or difference of the statistical property of the signal of which is within a predetermined range to belong to the same correlated antenna group. The statistical property of a signal may comprise at least one of the following properties of a signal: mean, variance, distribution function, autocorrelation function, and cross correlation function.

In another specific embodiment of the device 300 for generating a precoding matrix codebook for use in communication system shown in Figure 3, the precoding matrix processing unit 320 may be configured to, for each selected correlated antenna group, in the event that at least one precoding matrix corresponding to one antenna unit is removed from the antenna unit included in the selected correlated antenna group, remove respectively the same number of symmetrical precoding matrix from precoding matrices corresponding to each antenna unit of other antenna units included in the selected correlated antenna group. The symmetrical precoding matrix mentioned here has the same subject element as the at least one precoding matrix removed from the above one antenna unit.

According to a specific example, the precoding matrix processing unit 320 may be configured to execute processes for the precoding matrix corresponding to an antenna unit included in the correlated antenna group in the method of generating uplink CMP precoding matrix codebook with a size of 20 in the MIMO system described by referring to Figure 2.

In this example, the precoding matrix processing unit 320 may be configured to execute the following: selecting one correlated antenna group from three correlated antenna groups determined by the correlated antenna determining unit 310, removing two precoding matrices from precoding matrices corresponding to one antenna unit included in the correlated antenna group, and removing two symmetrical precoding matrices having the same subject element from precoding matrices corresponding to another antenna unit included in the correlated antenna group. Or, the precoding matrix processing unit 320 may be configured to execute the following: selecting two correlated antenna groups from three correlated antenna groups determined by the correlated antenna determining unit 310, for each of the two correlated antenna groups, removing one precoding matrix from precoding matrices corresponding to one antenna unit included in the correlated antenna group, and removing one symmetrical precoding matrices having the same subject element from precoding matrices corresponding to another antenna unit included in the correlated antenna group.

For further details of the operation of various component units of the device 300, reference may be made to various embodiments or examples of the method of generating precoding matrix codebooks for use in communication system according to an embodiment of the invention described with reference to Figures 1-2, and details are omitted here.

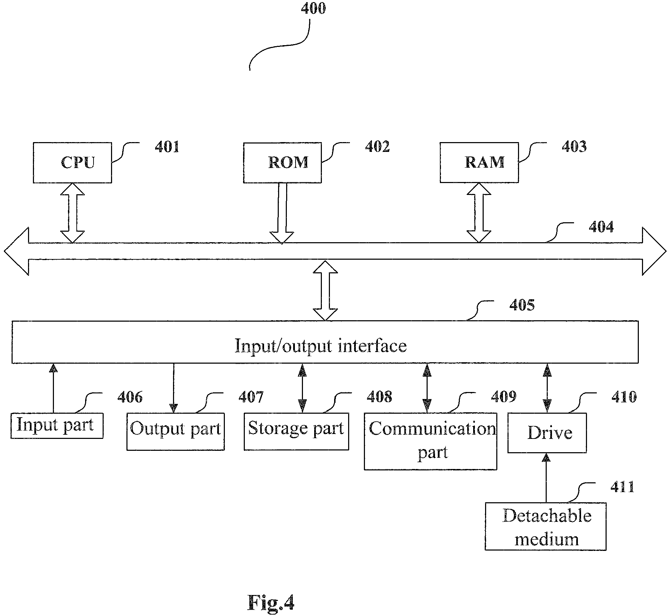

Various component modules, units and sub-units of the device 300 may be configured by software, firmware, hardware or their combination. Specific means and manners that may be used by the configuration are well known to those skilled in the art, and details are omitted here. In case of implementation by software or firmware, program constituting the software may be mounted to a computer (for example, the universal computer 400 as shown in Figure 4) having a dedicated hardware structure from a storage medium or network. The computer mounted with various program may execute various functions.

In addition, the method of generating precoding matrix codebook according to an embodiment of the invention may be implemented at the mobile terminal, the base station or the combination of the mobile terminal and the base station of the MIMO communication system. Correspondingly, the device 300 shown in Figure 3 may be configured in the mobile terminal or the base station to implement the method of generating precoding matrix codebooks according to an embodiment of the invention. Therefore, the mobile terminal and the base station having the above device 300 and the communication system with such a base station and/or a mobile terminal are also deemed as being covered by the scope of protection of the invention.

Figure 4 shows a schematic block diagram of a computer for implementing the method and device according to an embodiment of the invention.

In Figure 4, a central processing unit (CPU) 401 performs various processes according to the program stored in the Read-Only Memory (ROM) 402 or programs load from the storage section 408 to the Random Access Memory (RAM) 403. In the RAM 403 also stores data required when the CPU 1901 performs various processes as required. CPU 401, ROM 402 and RAM 403 are connected with each other via bus 404. Input/output interface 405 is also connected to the bus 404.

The following components are connected to the input/output interface 405: input section 406 (including keyboard, mouse, etc.); output section 407 (including display, such as cathode ray tube (CRT), liquid crystal display (LCD), etc., and speakers and so on); storage section 408 (including hard disc, etc.); and communication part 409 (including network interface cards such as LAN cards, modems and so on). The communication section 409 performs communication processes via network like the internet. According to requirements, drive 410 is also connected to the input/output interface 405. Detachable medium 411 such as magnetic disc, CD, magneto-optical disc, semiconductor memory, and so on may be installed on the drive 410 as required, such that the computer program read out therefrom is installed in the storage section 408 based on requirements.

In case of implementing the above processes by software, programs constituting the software are installed from a network such as Internet or from a storage medium such as the detachable medium 411.

Those ordinarily skilled in the art should understand that such storage medium is not limited to the detachable medium 411 which is stored with programs and distributes separately from the device to provide a user with program as shown in Figure 4. The example of the detachable medium 411 includes magnetic disc (including floppy disc (registered trademark)), CD (including CD read only memory (CD-ROM) and digital versatile disc (DVD)), magneto-optical disc (including mini-disc (MD) (registered trademark)) and semiconductor memory. Alternatively, the storage medium may be ROM 402, or hard disc included in the storage section 408 in which a program is stored and the program is distributed to a user with the device including the same.

The invention provides also a program product storing machine readable instruction code. When read and executed by a machine, the instruction code may implement the method according to the embodiment of the invention.

Correspondingly, a storage medium for carrying the program product storing the machine readable instruction code is also included in the invention. The storage medium includes, but not limits to, Floppy disk, optical disk, magneto-optical disk, memory card, memory stick, etc.

In the description of the specific embodiment of the invention, features descried and/or shown in one embodiment may be used in one or more other embodiments in a same or similar manner, or may be combined with features in other embodiments, or replace features in other embodiments.

It shall be emphasized that the technical term "comprise/include" used here refer to an existence of a feature, an element, a step or a component, without excluding existences or attachments of one or more other features, elements, steps or components.

In addition, the method of the invention is not limited to be executed by the temporal order provided in the Description, and the method may be executed sequentially, in parallel or independently by other time order. Therefore, the order of executing the method descried in the Description does not limit the scope of protection of the invention.

It can be obtained from the above description that the following solutions are covered by the invention:

Annex 1. A method of generating a precoding matrix codebook for use in a communication system, including:

determining at least one correlated antenna group formed by antenna units with a predefined degree of correlation among a plurality of antenna units in the communication system; and

selecting at least one correlated antenna group from the determined correlated antenna groups, and processing precoding matrices corresponding to the selected correlated antenna groups, so that for each selected correlated antenna group, the processed precoding matrix respectively corresponding to each antenna unit of the selected correlated antenna groups has symmetry.

Annex 2. The method according to annex 1, wherein the process of determining at least one correlated antenna group includes determining antenna units having the same statistical property of a signal or the difference of the statistical property of the signal of which is within a predetermined range to belong to the same correlated antenna group, the statistical property of a signal includes at least one of the following properties of the signal: mean, variance, distribution function, autocorrelation function, and cross correlation function.

Annex 3. The method according to annex 1 or 2, wherein, the process of processing precoding matrices corresponding to the selected correlated antenna group includes:

for each selected correlated antenna group, in the event that at least one precoding matrix corresponding to one antenna unit is removed from the antenna unit included in the selected correlated antenna group, removing the same number of symmetrical precoding matrices from precoding matrices corresponding to each antenna unit of other antenna units contained in the selected correlated antenna group, wherein, the symmetrical precoding matrix has the same subject element as the at least one precoding matrix removed from the one antenna unit.

Annex 4. The method according to any one of annexes 1 to 3, wherein, the precoding matrix codebooks are cubic metric preserve (CMP) uplink precoding codebooks with a Rank of 3 for use in MIMO system, wherein the communication system includes four transmitting antennas, wherein a first antenna and a second antenna are in cross polarization configuration, and a third antenna and a fourth antenna are in cross polarization configuration, and wherein, the process of determining the correlated antenna group includes determining the following correlated antenna group:

a correlated antenna group formed of a first antenna unit composed of a first antenna and a second antenna and a sixth antenna unit composed of a third antenna and a fourth antenna;

a correlated antenna group formed of a second antenna unit composed of a first antenna and a third antenna and a fifth antenna unit composed of a second antenna and a fourth antenna; and

a correlated antenna group formed of a third antenna unit composed of a first antenna and a fourth antenna and a fourth antenna unit composed of a second antenna and a third antenna.

Annex 5. The method according to annex 4, wherein, the process of processing precoding matrices corresponding to the selected correlated antenna group includes:

selecting one correlated antenna group from the three formed correlated antenna groups, removing two precoding matrices from precoding matrices corresponding to one antenna unit included in the correlated antenna group, and removing two symmetrical precoding matrices having the same subject element from precoding matrices corresponding to another antenna unit included in the correlated antenna group; or,

selecting two correlated antenna groups from the three formed correlated antenna groups, for each of the two correlated antenna groups, removing one precoding matrix from precoding matrices corresponding to one antenna unit included in the correlated antenna group, and removing one symmetrical precoding matrices having the same subject element from precoding matrices corresponding to another antenna unit included in the correlated antenna group.

Annex 6. The method according to annex 5, wherein, the process of processing precoding matrices corresponding to the selected correlated antenna group includes:
taking a correlated antenna group formed of a first antenna unit composed of a first antenna and a second antenna and a sixth antenna unit composed of a third antenna and a fourth antenna as the selected correlated antenna group, and removing a precoding matrix whose subject elements are {1, j} and [1, -j] from precoding matrices corresponding to the first antenna unit, and removing a precoding matrix whose subject elements are {1,j} and {1-j} from precoding matrices corresponding to the sixth antenna unit to obtain a precoding codebook with a size of 20:

| Index 0 to 3 | $\begin{bmatrix} 1 & 0 & 0 \\ 1 & 0 & 0 \\ 0 & 1 & 0 \\ 0 & 0 & 1 \end{bmatrix}$ | $\begin{bmatrix} 1 & 0 & 0 \\ -1 & 0 & 0 \\ 0 & 1 & 0 \\ 0 & 0 & 1 \end{bmatrix}$ | $\begin{bmatrix} 1 & 0 & 0 \\ 0 & 1 & 0 \\ 1 & 0 & 0 \\ 0 & 0 & 1 \end{bmatrix}$ | $\begin{bmatrix} 1 & 0 & 0 \\ 0 & 1 & 0 \\ j & 0 & 0 \\ 0 & 0 & 1 \end{bmatrix}$ |
|---|---|---|---|---|
| Index 4 to 7 | $\begin{bmatrix} 1 & 0 & 0 \\ 0 & 1 & 0 \\ -1 & 0 & 0 \\ 0 & 0 & 1 \end{bmatrix}$ | $\begin{bmatrix} 1 & 0 & 0 \\ 0 & 1 & 0 \\ -j & 0 & 0 \\ 0 & 0 & 1 \end{bmatrix}$ | $\begin{bmatrix} 1 & 0 & 0 \\ 0 & 1 & 0 \\ 0 & 0 & 1 \\ 1 & 0 & 0 \end{bmatrix}$ | $\begin{bmatrix} 1 & 0 & 0 \\ 0 & 1 & 0 \\ 0 & 0 & 1 \\ j & 0 & 0 \end{bmatrix}$ |
| Index 8 to 11 | $\begin{bmatrix} 1 & 0 & 0 \\ 0 & 1 & 0 \\ 0 & 0 & 1 \\ -1 & 0 & 0 \end{bmatrix}$ | $\begin{bmatrix} 1 & 0 & 0 \\ 0 & 1 & 0 \\ 0 & 0 & 1 \\ -j & 0 & 0 \end{bmatrix}$ | $\begin{bmatrix} 0 & 1 & 0 \\ 1 & 0 & 0 \\ 1 & 0 & 0 \\ 0 & 0 & 1 \end{bmatrix}$ | $\begin{bmatrix} 0 & 1 & 0 \\ 1 & 0 & 0 \\ j & 0 & 0 \\ 0 & 0 & 1 \end{bmatrix}$ |
| Index 12 to 15 | $\begin{bmatrix} 0 & 1 & 0 \\ 1 & 0 & 0 \\ -1 & 0 & 0 \\ 0 & 0 & 1 \end{bmatrix}$ | $\begin{bmatrix} 0 & 1 & 0 \\ 1 & 0 & 0 \\ -j & 0 & 0 \\ 0 & 0 & 1 \end{bmatrix}$ | $\begin{bmatrix} 0 & 1 & 0 \\ 1 & 0 & 0 \\ 0 & 0 & 1 \\ 1 & 0 & 0 \end{bmatrix}$ | $\begin{bmatrix} 0 & 1 & 0 \\ 1 & 0 & 0 \\ 0 & 0 & 1 \\ j & 0 & 0 \end{bmatrix}$ |
| Index 16 to 19 | $\begin{bmatrix} 0 & 1 & 0 \\ 1 & 0 & 0 \\ 0 & 0 & 1 \\ -1 & 0 & 0 \end{bmatrix}$ | $\begin{bmatrix} 0 & 1 & 0 \\ 1 & 0 & 0 \\ 0 & 0 & 1 \\ -j & 0 & 0 \end{bmatrix}$ | $\begin{bmatrix} 0 & 1 & 0 \\ 0 & 0 & 1 \\ 1 & 0 & 0 \\ 1 & 0 & 0 \end{bmatrix}$ | $\begin{bmatrix} 0 & 1 & 0 \\ 0 & 0 & 1 \\ 1 & 0 & 0 \\ -1 & 0 & 0 \end{bmatrix}$ |

wherein the power distribution matrix is $\Lambda = \begin{bmatrix} \frac{1}{2} & 0 & 0 \\ 0 & \frac{1}{2} & 0 \\ 0 & 0 & \frac{1}{2} \end{bmatrix}$ · Annex 7. The method according to annex 5, wherein, the process of processing precoding matrices corresponding to the selected correlated antenna group includes:
taking a correlated antenna group formed of a second antenna unit composed of a first antenna and a third antenna and a fifth antenna unit composed of a second antenna and a fourth antenna as a selected correlated antenna group, and removing a precoding matrix whose subject elements are {1, j} and [1, -j] from precoding matrices corresponding to the second antenna unit, and removing a precoding matrix whose subject elements are {1,j} and {1-j} from precoding matrices corresponding to the fifth antenna unit to obtain a precoding codebook with a size of 20:

| Index 0 to 3 | $\begin{bmatrix} 1 & 0 & 0 \\ 1 & 0 & 0 \\ 0 & 1 & 0 \\ 0 & 0 & 1 \end{bmatrix}$ | $\begin{bmatrix} 1 & 0 & 0 \\ -1 & 0 & 0 \\ 0 & 1 & 0 \\ 0 & 0 & 1 \end{bmatrix}$ | $\begin{bmatrix} 1 & 0 & 0 \\ 0 & 1 & 0 \\ 1 & 0 & 0 \\ 0 & 0 & 1 \end{bmatrix}$ | $\begin{bmatrix} 1 & 0 & 0 \\ j & 0 & 0 \\ 0 & 1 & 0 \\ 0 & 0 & 1 \end{bmatrix}$ |
|---|---|---|---|---|
| Index 4 to 7 | $\begin{bmatrix} 1 & 0 & 0 \\ 0 & 1 & 0 \\ -1 & 0 & 0 \\ 0 & 0 & 1 \end{bmatrix}$ | $\begin{bmatrix} 1 & 0 & 0 \\ -j & 0 & 0 \\ 0 & 1 & 0 \\ 0 & 0 & 1 \end{bmatrix}$ | $\begin{bmatrix} 1 & 0 & 0 \\ 0 & 1 & 0 \\ 0 & 0 & 1 \\ 1 & 0 & 0 \end{bmatrix}$ | $\begin{bmatrix} 1 & 0 & 0 \\ 0 & 1 & 0 \\ 0 & 0 & 1 \\ j & 0 & 0 \end{bmatrix}$ |
| Index 8 to 11 | $\begin{bmatrix} 1 & 0 & 0 \\ 0 & 1 & 0 \\ 0 & 0 & 1 \\ -1 & 0 & 0 \end{bmatrix}$ | $\begin{bmatrix} 1 & 0 & 0 \\ 0 & 1 & 0 \\ 0 & 0 & 1 \\ -j & 0 & 0 \end{bmatrix}$ | $\begin{bmatrix} 0 & 1 & 0 \\ 1 & 0 & 0 \\ 1 & 0 & 0 \\ 0 & 0 & 1 \end{bmatrix}$ | $\begin{bmatrix} 0 & 1 & 0 \\ 1 & 0 & 0 \\ j & 0 & 0 \\ 0 & 0 & 1 \end{bmatrix}$ |
| Index 12 to 15 | $\begin{bmatrix} 0 & 1 & 0 \\ 1 & 0 & 0 \\ -1 & 0 & 0 \\ 0 & 0 & 1 \end{bmatrix}$ | $\begin{bmatrix} 0 & 1 & 0 \\ 1 & 0 & 0 \\ -j & 0 & 0 \\ 0 & 0 & 1 \end{bmatrix}$ | $\begin{bmatrix} 0 & 1 & 0 \\ 1 & 0 & 0 \\ 0 & 0 & 1 \\ 1 & 0 & 0 \end{bmatrix}$ | $\begin{bmatrix} 0 & 1 & 0 \\ 0 & 0 & 1 \\ 1 & 0 & 0 \\ j & 0 & 0 \end{bmatrix}$ |
| Index 16 to 19 | $\begin{bmatrix} 0 & 1 & 0 \\ 1 & 0 & 0 \\ 0 & 0 & 1 \\ -1 & 0 & 0 \end{bmatrix}$ | $\begin{bmatrix} 0 & 1 & 0 \\ 0 & 0 & 1 \\ 1 & 0 & 0 \\ -j & 0 & 0 \end{bmatrix}$ | $\begin{bmatrix} 0 & 1 & 0 \\ 0 & 0 & 1 \\ 1 & 0 & 0 \\ 1 & 0 & 0 \end{bmatrix}$ | $\begin{bmatrix} 0 & 1 & 0 \\ 0 & 0 & 1 \\ 1 & 0 & 0 \\ -1 & 0 & 0 \end{bmatrix}$ |

wherein power distribution matrix A $\Lambda = \begin{bmatrix} \frac{1}{2} & 0 & 0 \\ 0 & \frac{1}{2} & 0 \\ 0 & 0 & \frac{1}{2} \end{bmatrix}$ · Annex 8. The method according to annex 5, wherein, the process of processing precoding matrices corresponding to the selected correlated antenna group includes:
taking a correlated antenna group formed of a second antenna unit composed of a first antenna and a third antenna and a fifth antenna unit composed of a second antenna and a fourth antenna as a selected correlated antenna group, and removing a precoding matrix whose subject elements are {1, 1} and {1, -1} from precoding matrices corresponding to the second antenna unit, and removing a precoding matrix whose subject elements are {1, 1} and {1, -1} from precoding matrices corresponding to the fifth antenna unit to obtain a precoding codebook with a size of 20:

| Index 0 to 3 | $\begin{bmatrix} 1 & 0 & 0 \\ 1 & 0 & 0 \\ 0 & 1 & 0 \\ 0 & 0 & 1 \end{bmatrix}$ | $\begin{bmatrix} 1 & 0 & 0 \\ -1 & 0 & 0 \\ 0 & 1 & 0 \\ 0 & 0 & 1 \end{bmatrix}$ | $\begin{bmatrix} 1 & 0 & 0 \\ 0 & 1 & 0 \\ j & 0 & 0 \\ 0 & 0 & 1 \end{bmatrix}$ | $\begin{bmatrix} 1 & 0 & 0 \\ j & 0 & 0 \\ 0 & 1 & 0 \\ 0 & 0 & 1 \end{bmatrix}$ |
|---|---|---|---|---|
| Index 4 to 7 | $\begin{bmatrix} 1 & 0 & 0 \\ 0 & 1 & 0 \\ -j & 0 & 0 \\ 0 & 0 & 1 \end{bmatrix}$ | $\begin{bmatrix} 1 & 0 & 0 \\ -j & 0 & 0 \\ 0 & 1 & 0 \\ 0 & 0 & 1 \end{bmatrix}$ | $\begin{bmatrix} 1 & 0 & 0 \\ 0 & 1 & 0 \\ 0 & 0 & 1 \\ 1 & 0 & 0 \end{bmatrix}$ | $\begin{bmatrix} 1 & 0 & 0 \\ 0 & 1 & 0 \\ 0 & 0 & 1 \\ j & 0 & 0 \end{bmatrix}$ |
| Index 8 to 11 | $\begin{bmatrix} 1 & 0 & 0 \\ 0 & 1 & 0 \\ 0 & 0 & 1 \\ -1 & 0 & 0 \end{bmatrix}$ | $\begin{bmatrix} 1 & 0 & 0 \\ 0 & 1 & 0 \\ 0 & 0 & 1 \\ -j & 0 & 0 \end{bmatrix}$ | $\begin{bmatrix} 0 & 1 & 0 \\ 1 & 0 & 0 \\ 1 & 0 & 0 \\ 0 & 0 & 1 \end{bmatrix}$ | $\begin{bmatrix} 0 & 1 & 0 \\ 1 & 0 & 0 \\ j & 0 & 0 \\ 0 & 0 & 1 \end{bmatrix}$ |
| Index 12 to 15 | $\begin{bmatrix} 0 & 1 & 0 \\ 1 & 0 & 0 \\ -1 & 0 & 0 \\ 0 & 0 & 1 \end{bmatrix}$ | $\begin{bmatrix} 0 & 1 & 0 \\ 1 & 0 & 0 \\ -j & 0 & 0 \\ 0 & 0 & 1 \end{bmatrix}$ | $\begin{bmatrix} 0 & 1 & 0 \\ 1 & 0 & 0 \\ 0 & 0 & 1 \\ j & 0 & 0 \end{bmatrix}$ | $\begin{bmatrix} 0 & 1 & 0 \\ 0 & 0 & 1 \\ 1 & 0 & 0 \\ j & 0 & 0 \end{bmatrix}$ |
| Index 16 to 19 | $\begin{bmatrix} 0 & 1 & 0 \\ 1 & 0 & 0 \\ 0 & 0 & 1 \\ -j & 0 & 0 \end{bmatrix}$ | $\begin{bmatrix} 0 & 1 & 0 \\ 0 & 0 & 1 \\ 1 & 0 & 0 \\ -j & 0 & 0 \end{bmatrix}$ | $\begin{bmatrix} 0 & 1 & 0 \\ 0 & 0 & 1 \\ 1 & 0 & 0 \\ 1 & 0 & 0 \end{bmatrix}$ | $\begin{bmatrix} 0 & 1 & 0 \\ 0 & 0 & 1 \\ 1 & 0 & 0 \\ -1 & 0 & 0 \end{bmatrix}$ |

wherein power distribution matrix $\Lambda = \begin{bmatrix} 1/2 & 0 & 0 \\ 0 & 1/2 & 0 \\ 0 & 0 & 1/2 \end{bmatrix}$. Annex 9. A device for generating a precoding matrix codebook for use in a communication system, comprising:

a correlated antenna determining unit configured to determine at least one correlated antenna group formed by antenna units with a predefined degree of correlation among a plurality of antenna units in the communication system; and

a precoding matrix processing unit configured to select at least one correlated antenna group from the determined correlated antenna groups, and process precoding matrices corresponding to the selected correlated antenna groups, so that for each selected correlated antenna group, the processed precoding matrix respectively corresponding to each antenna unit of the selected correlated antenna groups has symmetry.

Annex 10. The device according to annex 9, wherein, the correlated antenna determining unit is configured to determine an antenna unit having the same statistics property of a signal or a difference of the statistical property of the signal of which is within a predetermined range to belong to the same correlated antenna group, the statistical property of a signal includes at least one of the following properties of the signal: mean, variance, distribution function, autocorrelation function, and cross correlation function.

Annex 11. The device according to annex 9 or 10, wherein, the precoding matrix processing unit is configured to:

for each selected correlated antenna group, in the event that at least one precoding matrix corresponding to one antenna unit is removed from the antenna unit included in the selected correlated antenna group, remove the same number of symmetrical precoding matrix respectively from precoding matrices corresponding to each antenna unit of other antenna units contained in the correlated antenna group, wherein, the symmetrical precoding matrix has the same subject element as the at least one precoding matrix removed from the one antenna unit.

Annex 12. The device according to any one of annexes 9-11, wherein, the precoding matrix codebooks are cubic metric preserve (CMP) uplink precoding codebook with a Rank of 3 for use in MIMO system, the communication system includes four transmitting antennas, wherein a first antenna and a second antenna are in cross polarization configuration, and a third antenna and a fourth antenna are in cross polarization configuration, and wherein, the correlated antenna determining unit is configured to determine the following correlated antenna group:

a correlated antenna group formed of a first antenna unit composed of a first antenna and a second antenna and a sixth antenna unit composed of a third antenna and a fourth antenna;

a correlated antenna group formed of a second antenna unit composed of a first antenna and a third antenna and a fifth antenna unit consisting of a second antenna and a fourth antenna; and

a correlated antenna group formed of a third antenna unit composed of a first antenna and a fourth antenna and a fourth antenna unit composed of a second antenna and a third antenna.

Annex 13. The device according to annex 12, wherein the precoding matrix processing unit is configured to:

select one correlated antenna group from three correlated antenna groups determined by the correlated antenna determining unit, remove two precoding matrices from precoding matrices corresponding to one antenna unit included in the correlated antenna group, and remove two symmetrical precoding matrices having the same subject element from precoding matrices corresponding to another antenna unit included in the correlated antenna group; or,

select two correlated antenna groups from three correlated antenna groups determined by the correlated antenna determining unit, for each of the two correlated antenna groups, remove one precoding matrix from precoding matrices corresponding to one antenna unit included in the correlated antenna group, and remove one symmetrical precoding matrices having the same subject element from precoding matrices corresponding to another antenna unit included in the correlated antenna group.

Annex 14. A mobile terminal having the device for generating precoding matrix codebook for use in communication system according to any of annexes 9-13.

Annex 15. A base station having the device for generating precoding matrix codebook for use in communication system according to any of annexes 9-13.

Annex 16. A communication system comprising the mobile station according to annex 14 and/or the base station according to annex 15.

Annex 17. A program product storing with machine readable instruction code, when read and executed by a machine, the instruction code executes the method of generating precoding matrix codebook for use in communication system according to any of annexes 1-8.

Annex 18. A storage medium carrying the program product according to annex 17.

Although the invention has been disclosed by description of the specific embodiments of the invention, it shall be understood that all of the above embodiments and examples are illustrative rather than being restrictive. Various amendments, improvements or equivalents of the invention may be designed by those skilled in the art within the spirit and scope of the attached claims. Those amendments, improvements or equivalents shall be regarded as being included in the scope of protection of the invention.

**Claims**

1. A method of generating a precoding matrix codebook for use in a communication system, comprising:

determining at least one correlated antenna group formed by antenna units with a predefined degree of correlation among a plurality of antenna units in the communication system; and

selecting at least one correlated antenna group from the determined correlated antenna groups, and processing precoding matrices corresponding to the selected correlated antenna groups, so that for each selected correlated antenna group, the processed precoding matrix respectively corresponding to each antenna unit of the selected correlated antenna groups has symmetry.

2. The method according to claim 1, wherein the process of determining at least one correlated antenna group comprises determining antenna units which have the same statistical property of a signal or the difference of the statistical property of the signal of which is within a predetermined range to belong to the same correlated antenna group, the statistical property of a signal comprises at least one of the following properties of the signal: mean, variance, distribution function, autocorrelation function, and cross correlation function.

3. The method according to claim 1 or 2, wherein, the process of processing precoding matrices corresponding to the selected correlated antenna group comprises:

for each selected correlated antenna group, in the event that at least one precoding matrix corresponding to one antenna unit is removed from the antenna unit included in the selected correlated antenna group, removing the same number of symmetrical precoding matrices from precoding matrices corresponding to each antenna unit of other antenna units contained in the selected correlated antenna group, wherein, the symmetrical precoding matrix has the same subject element as the at least one precoding matrix removed from the one antenna unit.

4. The method according to any one of claims 1 to 3, wherein, the precoding matrix codebooks are cubic metric preserve (CMP) uplink precoding codebooks with a Rank of 3 for use in MIMO system, wherein the communication system comprises four transmitting antennas, wherein a first antenna and a second antenna are in cross polarization configuration, and a third antenna and a fourth antenna are in cross polarization configuration, and wherein, the process of determining the correlated antenna group comprises determining the following correlated antenna group:

a correlated antenna group formed of a first antenna unit composed of a first antenna and a second antenna and a sixth antenna unit composed of a third antenna and a fourth antenna;

a correlated antenna group formed of a second antenna unit composed of a first antenna and a third antenna and a fifth antenna unit composed of a second antenna and a fourth antenna; and

a correlated antenna group formed of a third antenna unit composed of a first antenna and a fourth antenna and a fourth antenna unit composed of a second antenna and a third antenna.

5. The method according to claim 4, wherein, the process of processing precoding matrices corresponding to the selected correlated antenna group comprises:

selecting one correlated antenna group from the three formed correlated antenna groups, removing two precoding matrices from precoding matrices corresponding to one antenna unit included in the correlated antenna group, and removing two symmetrical precoding matrices having the same subject element from precoding matrices corresponding to another antenna unit included in the correlated antenna group; or,

selecting two correlated antenna groups from the three formed correlated antenna groups, for each of the two correlated antenna groups, removing one precoding matrix from precoding matrices corresponding to one antenna unit included in the correlated antenna group, and removing one symmetrical precoding matrices having the same subject element from precoding matrices corresponding to another antenna unit included in the correlated antenna group.

6. The method according to claim 5, wherein, the process of processing precoding matrices corresponding to the selected correlated antenna group comprises:

taking a correlated antenna group formed of a first antenna unit composed of a first antenna and a second antenna and a sixth antenna unit composed of a third antenna and a fourth antenna as the selected correlated antenna group, and removing a precoding matrix whose subject elements are {1, j} and [1, -j] from precoding matrices corresponding to the first antenna unit, and removing a precoding matrix whose subject elements are {1,j} and {1-j} from precoding matrices corresponding to the sixth antenna unit to obtain a precoding codebook with a size of 20:

| | | | | |
|---|---|---|---|---|
| Index 0 to 3 | $\begin{bmatrix} 1 & 0 & 0 \\ 1 & 0 & 0 \\ 0 & 1 & 0 \\ 0 & 0 & 1 \end{bmatrix}$ | $\begin{bmatrix} 1 & 0 & 0 \\ -1 & 0 & 0 \\ 0 & 1 & 0 \\ 0 & 0 & 1 \end{bmatrix}$ | $\begin{bmatrix} 1 & 0 & 0 \\ 0 & 1 & 0 \\ 1 & 0 & 0 \\ 0 & 0 & 1 \end{bmatrix}$ | $\begin{bmatrix} 1 & 0 & 0 \\ 0 & 1 & 0 \\ j & 0 & 0 \\ 0 & 0 & 1 \end{bmatrix}$ |
| Index 4 to 7 | $\begin{bmatrix} 1 & 0 & 0 \\ 0 & 1 & 0 \\ -1 & 0 & 0 \\ 0 & 0 & 1 \end{bmatrix}$ | $\begin{bmatrix} 1 & 0 & 0 \\ 0 & 1 & 0 \\ -j & 0 & 0 \\ 0 & 0 & 1 \end{bmatrix}$ | $\begin{bmatrix} 1 & 0 & 0 \\ 0 & 1 & 0 \\ 0 & 0 & 1 \\ 1 & 0 & 0 \end{bmatrix}$ | $\begin{bmatrix} 1 & 0 & 0 \\ 0 & 1 & 0 \\ 0 & 0 & 1 \\ j & 0 & 0 \end{bmatrix}$ |
| Index 8 to 11 | $\begin{bmatrix} 1 & 0 & 0 \\ 0 & 1 & 0 \\ 0 & 0 & 1 \\ -1 & 0 & 0 \end{bmatrix}$ | $\begin{bmatrix} 1 & 0 & 0 \\ 0 & 1 & 0 \\ 0 & 0 & 1 \\ -j & 0 & 0 \end{bmatrix}$ | $\begin{bmatrix} 0 & 1 & 0 \\ 1 & 0 & 0 \\ 1 & 0 & 0 \\ 0 & 0 & 1 \end{bmatrix}$ | $\begin{bmatrix} 0 & 1 & 0 \\ 1 & 0 & 0 \\ j & 0 & 0 \\ 0 & 0 & 1 \end{bmatrix}$ |
| Index 12 to 15 | $\begin{bmatrix} 0 & 1 & 0 \\ 1 & 0 & 0 \\ -1 & 0 & 0 \\ 0 & 0 & 1 \end{bmatrix}$ | $\begin{bmatrix} 0 & 1 & 0 \\ 1 & 0 & 0 \\ -j & 0 & 0 \\ 0 & 0 & 1 \end{bmatrix}$ | $\begin{bmatrix} 0 & 1 & 0 \\ 1 & 0 & 0 \\ 0 & 0 & 1 \\ 1 & 0 & 0 \end{bmatrix}$ | $\begin{bmatrix} 0 & 1 & 0 \\ 1 & 0 & 0 \\ 0 & 0 & 1 \\ j & 0 & 0 \end{bmatrix}$ |
| Index 16 to 19 | $\begin{bmatrix} 0 & 1 & 0 \\ 1 & 0 & 0 \\ 0 & 0 & 1 \\ -1 & 0 & 0 \end{bmatrix}$ | $\begin{bmatrix} 0 & 1 & 0 \\ 1 & 0 & 0 \\ 0 & 0 & 1 \\ -j & 0 & 0 \end{bmatrix}$ | $\begin{bmatrix} 0 & 1 & 0 \\ 0 & 0 & 1 \\ 1 & 0 & 0 \\ 1 & 0 & 0 \end{bmatrix}$ | $\begin{bmatrix} 0 & 1 & 0 \\ 0 & 0 & 1 \\ 1 & 0 & 0 \\ -1 & 0 & 0 \end{bmatrix}$ |

wherein the power distribution matrix is A $\Lambda = \begin{bmatrix} 1/2 & 0 & 0 \\ 0 & 1/2 & 0 \\ 0 & 0 & 1/2 \end{bmatrix}$.

7. The method according to claim 5, wherein, the process of processing precoding matrices corresponding to the selected correlated antenna group comprises:

taking a correlated antenna group formed of a second antenna unit composed of a first antenna and a third antenna and a fifth antenna unit composed of a second antenna and a fourth antenna as a selected correlated antenna group, and removing a precoding matrix whose subject elements are {1, j} and [1, -j] from precoding matrices corresponding to the second antenna unit, and removing a precoding matrix whose subject elements are {1,j} and {1-j} from precoding matrices corresponding to the fifth antenna unit to obtain a precoding codebook with a size of 20:

| | | | | |
|---|---|---|---|---|
| Index 0 to 3 | $\begin{bmatrix} 1 & 0 & 0 \\ 1 & 0 & 0 \\ 0 & 1 & 0 \\ 0 & 0 & 1 \end{bmatrix}$ | $\begin{bmatrix} 1 & 0 & 0 \\ -1 & 0 & 0 \\ 0 & 1 & 0 \\ 0 & 0 & 1 \end{bmatrix}$ | $\begin{bmatrix} 1 & 0 & 0 \\ 0 & 1 & 0 \\ 1 & 0 & 0 \\ 0 & 0 & 1 \end{bmatrix}$ | $\begin{bmatrix} 1 & 0 & 0 \\ j & 0 & 0 \\ 0 & 1 & 0 \\ 0 & 0 & 1 \end{bmatrix}$ |
| Index 4 to 7 | $\begin{bmatrix} 1 & 0 & 0 \\ 0 & 1 & 0 \\ -1 & 0 & 0 \\ 0 & 0 & 1 \end{bmatrix}$ | $\begin{bmatrix} 1 & 0 & 0 \\ -j & 0 & 0 \\ 0 & 1 & 0 \\ 0 & 0 & 1 \end{bmatrix}$ | $\begin{bmatrix} 1 & 0 & 0 \\ 0 & 1 & 0 \\ 0 & 0 & 1 \\ 1 & 0 & 0 \end{bmatrix}$ | $\begin{bmatrix} 1 & 0 & 0 \\ 0 & 1 & 0 \\ 0 & 0 & 1 \\ j & 0 & 0 \end{bmatrix}$ |
| Index 8 to 11 | $\begin{bmatrix} 1 & 0 & 0 \\ 0 & 1 & 0 \\ 0 & 0 & 1 \\ -1 & 0 & 0 \end{bmatrix}$ | $\begin{bmatrix} 1 & 0 & 0 \\ 0 & 1 & 0 \\ 0 & 0 & 1 \\ -j & 0 & 0 \end{bmatrix}$ | $\begin{bmatrix} 0 & 1 & 0 \\ 1 & 0 & 0 \\ 1 & 0 & 0 \\ 0 & 0 & 1 \end{bmatrix}$ | $\begin{bmatrix} 0 & 1 & 0 \\ 1 & 0 & 0 \\ j & 0 & 0 \\ 0 & 0 & 1 \end{bmatrix}$ |
| Index 12 to 15 | $\begin{bmatrix} 0 & 1 & 0 \\ 1 & 0 & 0 \\ -1 & 0 & 0 \\ 0 & 0 & 1 \end{bmatrix}$ | $\begin{bmatrix} 0 & 1 & 0 \\ 1 & 0 & 0 \\ -j & 0 & 0 \\ 0 & 0 & 1 \end{bmatrix}$ | $\begin{bmatrix} 0 & 1 & 0 \\ 1 & 0 & 0 \\ 0 & 0 & 1 \\ 1 & 0 & 0 \end{bmatrix}$ | $\begin{bmatrix} 0 & 1 & 0 \\ 0 & 0 & 1 \\ 1 & 0 & 0 \\ j & 0 & 0 \end{bmatrix}$ |
| Index 16 to 19 | $\begin{bmatrix} 0 & 1 & 0 \\ 1 & 0 & 0 \\ 0 & 0 & 1 \\ -1 & 0 & 0 \end{bmatrix}$ | $\begin{bmatrix} 0 & 1 & 0 \\ 0 & 0 & 1 \\ 1 & 0 & 0 \\ -j & 0 & 0 \end{bmatrix}$ | $\begin{bmatrix} 0 & 1 & 0 \\ 0 & 0 & 1 \\ 1 & 0 & 0 \\ 1 & 0 & 0 \end{bmatrix}$ | $\begin{bmatrix} 0 & 1 & 0 \\ 0 & 0 & 1 \\ 1 & 0 & 0 \\ -1 & 0 & 0 \end{bmatrix}$ |

wherein power distribution matrix $\Lambda = \begin{bmatrix} 1/2 & 0 & 0 \\ 0 & 1/2 & 0 \\ 0 & 0 & 1/2 \end{bmatrix}$.

8. The method according to claim 5, wherein, the process of processing precoding matrices corresponding to the selected correlated antenna group comprises:

taking a correlated antenna group formed of a second antenna unit composed of a first antenna and a third antenna and a fifth antenna unit composed of a second antenna and a fourth antenna as a selected correlated antenna group, and removing a precoding matrix whose subject elements are {1, 1} and {1, -1} from precoding matrices corresponding to the second antenna unit, and removing a precoding matrix whose subject elements are {1, 1} and {1, -1} from precoding matrices corresponding to the fifth antenna unit to obtain a precoding codebook with a size of 20:

| Index 0 to 3 | $\begin{bmatrix} 1 & 0 & 0 \\ 1 & 0 & 0 \\ 0 & 1 & 0 \\ 0 & 0 & 1 \end{bmatrix}$ | $\begin{bmatrix} 1 & 0 & 0 \\ -1 & 0 & 0 \\ 0 & 1 & 0 \\ 0 & 0 & 1 \end{bmatrix}$ | $\begin{bmatrix} 1 & 0 & 0 \\ 0 & 1 & 0 \\ j & 0 & 0 \\ 0 & 0 & 1 \end{bmatrix}$ | $\begin{bmatrix} 1 & 0 & 0 \\ j & 0 & 0 \\ 0 & 1 & 0 \\ 0 & 0 & 1 \end{bmatrix}$ |
|---|---|---|---|---|
| Index 4 to 7 | $\begin{bmatrix} 1 & 0 & 0 \\ 0 & 1 & 0 \\ -j & 0 & 0 \\ 0 & 0 & 1 \end{bmatrix}$ | $\begin{bmatrix} 1 & 0 & 0 \\ -j & 0 & 0 \\ 0 & 1 & 0 \\ 0 & 0 & 1 \end{bmatrix}$ | $\begin{bmatrix} 1 & 0 & 0 \\ 0 & 1 & 0 \\ 0 & 0 & 1 \\ 1 & 0 & 0 \end{bmatrix}$ | $\begin{bmatrix} 1 & 0 & 0 \\ 0 & 1 & 0 \\ 0 & 0 & 1 \\ j & 0 & 0 \end{bmatrix}$ |
| Index 8 to 11 | $\begin{bmatrix} 1 & 0 & 0 \\ 0 & 1 & 0 \\ 0 & 0 & 1 \\ -1 & 0 & 0 \end{bmatrix}$ | $\begin{bmatrix} 1 & 0 & 0 \\ 0 & 1 & 0 \\ 0 & 0 & 1 \\ -j & 0 & 0 \end{bmatrix}$ | $\begin{bmatrix} 0 & 1 & 0 \\ 1 & 0 & 0 \\ 1 & 0 & 0 \\ 0 & 0 & 1 \end{bmatrix}$ | $\begin{bmatrix} 0 & 1 & 0 \\ 1 & 0 & 0 \\ j & 0 & 0 \\ 0 & 0 & 1 \end{bmatrix}$ |
| Index 12 to 15 | $\begin{bmatrix} 0 & 1 & 0 \\ 1 & 0 & 0 \\ -1 & 0 & 0 \\ 0 & 0 & 1 \end{bmatrix}$ | $\begin{bmatrix} 0 & 1 & 0 \\ 1 & 0 & 0 \\ -j & 0 & 0 \\ 0 & 0 & 1 \end{bmatrix}$ | $\begin{bmatrix} 0 & 1 & 0 \\ 1 & 0 & 0 \\ 0 & 0 & 1 \\ j & 0 & 0 \end{bmatrix}$ | $\begin{bmatrix} 0 & 1 & 0 \\ 0 & 0 & 1 \\ 1 & 0 & 0 \\ j & 0 & 0 \end{bmatrix}$ |
| Index 16 to 19 | $\begin{bmatrix} 0 & 1 & 0 \\ 1 & 0 & 0 \\ 0 & 0 & 1 \\ -j & 0 & 0 \end{bmatrix}$ | $\begin{bmatrix} 0 & 1 & 0 \\ 0 & 0 & 1 \\ 1 & 0 & 0 \\ -j & 0 & 0 \end{bmatrix}$ | $\begin{bmatrix} 0 & 1 & 0 \\ 0 & 0 & 1 \\ 1 & 0 & 0 \\ 1 & 0 & 0 \end{bmatrix}$ | $\begin{bmatrix} 0 & 1 & 0 \\ 0 & 0 & 1 \\ 1 & 0 & 0 \\ -1 & 0 & 0 \end{bmatrix}$ |

wherein power distribution matrix $\Lambda = \begin{bmatrix} 1/2 & 0 & 0 \\ 0 & 1/2 & 0 \\ 0 & 0 & 1/2 \end{bmatrix}$.

9. A device for generating a precoding matrix codebook for use in a communication system, comprising:

a correlated antenna determining unit configured to determine at least one correlated antenna group formed by antenna units with a predefined degree of correlation among a plurality of antenna units in the communication system; and

a precoding matrix processing unit configured to select at least one correlated antenna group from the determined correlated antenna groups, and process precoding matrices corresponding to the selected correlated antenna groups, so that for each selected correlated antenna group, the processed precoding matrix respectively corresponding to each antenna unit of the selected correlated antenna groups has symmetry.

10. The device according to claim 9, wherein, the correlated antenna determining unit is configured to determine an antenna unit having the same statistics property of a signal or a difference of the statistical property of the signal of which is within a predetermined range to belong to the same correlated antenna group, the statistical property of a signal comprises at least one of the following properties of the signal: mean, variance, distribution function, autocorrelation function, and cross correlation function.

11. The device according to claim 9 or 10, wherein, the precoding matrix processing unit is configured to:

for each selected correlated antenna group, in the event that at least one precoding matrix corresponding to one antenna unit is removed from the antenna unit included in the selected correlated antenna group, remove the same number of symmetrical precoding matrix respectively from precoding matrices corresponding to each antenna unit of other antenna units contained in the correlated antenna group, wherein, the symmetrical precoding matrix has the same subject element as the at least one precoding matrix removed from the one antenna unit.

12. The device according to claims 9-11, wherein, the precoding matrix codebooks are cubic metric preserve (CMP) uplink precoding codebook with a Rank of 3 for use in MIMO system, the communication system comprises four transmitting antennas, wherein a first antenna and a second antenna are in cross polarization configuration, and a third antenna and a fourth antenna are in cross polarization configuration, and wherein, the correlated antenna determining unit is configured to determine the following correlated antenna group:

a correlated antenna group formed of a first antenna unit composed of a first antenna and a second antenna and a sixth antenna unit composed of a third antenna and a fourth antenna;
a correlated antenna group formed of a second antenna unit composed of a first antenna and a third antenna and a fifth antenna unit consisting of a second antenna and a fourth antenna; and
a correlated antenna group formed of a third antenna unit composed of a first antenna and a fourth antenna and a fourth antenna unit composed of a second antenna and a third antenna.

13. The device according to claim 12, wherein the precoding matrix processing unit is configured to:

select one correlated antenna group from three correlated antenna groups determined by the correlated antenna determining unit, remove two precoding matrices from precoding matrices corresponding to one antenna unit included in the correlated antenna group, and remove two symmetrical precoding matrices having the same subject element from precoding matrices corresponding to another antenna unit included in the correlated antenna group; or,
select two correlated antenna groups from three correlated antenna groups determined by the correlated antenna determining unit, for each of the two correlated antenna groups, remove one precoding matrix from precoding matrices corresponding to one antenna unit included in the correlated antenna group, and remove one symmetrical precoding matrices having the same subject element from precoding matrices corresponding to another antenna unit included in the correlated antenna group.

**14.** A mobile terminal having the device for generating precoding matrix codebook for use in communication system according to any of claims 9-13.

**15.** A base station having the device for generating precoding matrix codebook for use in communication system according to any of claims 9-13.

**16.** A communication system comprising the mobile terminal according to claim 14 and/or the base station according to claim 15.

**17.** A program product storing with machine readable instruction code, when read and executed by a machine, the instruction code executes the method of generating precoding matrix codebook for use in communication system according to any of claims 1-8.

**18.** A storage medium carrying the program product according to claim 17.

100

Start

Determining at least one correlated antenna group formed by antenna units with predefined degree of correlation among multiple antenna units in the communication system — S110

Selecting at least one correlated antenna group from the determined correlated antenna groups, and processing the precoding matrices corresponding to the selected correlated antenna groups, so that for each selected correlated antenna group, the processed precoding matrix respectively corresponding to each antenna unit of the selected correlated antenna groups has symmetry — S120

End

Fig.1

Fig.2

Fig.3

400

| 401 | | 402 | | 403 |
| CPU | | ROM | | RAM |

404

405

Input/output interface

| Input part | Output part | Storage part | Communication part | Drive |
| 406 | 407 | 408 | 409 | 410 |

Detachable medium 411

Fig.4

# INTERNATIONAL SEARCH REPORT

| | International application No. |
|---|---|
| | PCT/CN2009/076145 |

**A. CLASSIFICATION OF SUBJECT MATTER**

H04B 7/00（2006.01）i

According to International Patent Classification (IPC) or to both national classification and IPC

**B. FIELDS SEARCHED**

Minimum documentation searched (classification system followed by classification symbols)

IPC: H04B 7/-

Documentation searched other than minimum documentation to the extent that such documents are included in the fields searched

Electronic data base consulted during the international search (name of data base and, where practicable, search terms used)

CNKI;CPRS;WPI:EPODOC:antenna correlation MIMO precod+ codebook symmetr+ matrix matrices complexity comput+

**C. DOCUMENTS CONSIDERED TO BE RELEVANT**

| Category* | Citation of document, with indication, where appropriate, of the relevant passages | Relevant to claim No. |
|---|---|---|
| A | US20080186212A1 (SAMSUNG ELECTRONICS CO LTD) 07 Aug. 2008 (07.08.2008) Abstract, description paragraph [0116], fig. 5 | 1-18 |
| A | CN101540663A (UNIV BEIJING POSTS & TELECOMM) 23 Sep. 2009 (23.09.2009) Abstract, description page 7 line 1- page 9 line 9, fig. 2 | 1-18 |
| A | CN101127582A (UNIV BEIJING POSTS & TELECOMM) 20 Feb. 2008 (20.02.2008) Abstract | 1-18 |

☐ Further documents are listed in the continuation of Box C. ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 14 Sep. 2010 (14.09.2010) | **21 Oct. 2010 (21.10.2010)** |

| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer WANG, Jing Telephone No. (86-10)62411294 |
|---|---|

Form PCT/ISA /210 (second sheet) (July 2009)

## INTERNATIONAL SEARCH REPORT
Information on patent family members

International application No.

PCT/CN2009/076145

| Patent Documents referred in the Report | Publication Date | Patent Family | Publication Date |
|---|---|---|---|
| US20080186212A1 | 07.08.2008 | CN101675599A | 17.03.2010 |
| | | WO2008097035A1 | 14.08.2008 |
| | | KR20080073624A | 11.08.2008 |
| | | KR20080073665A | 11.08.2008 |
| | | KR20080073680A | 11.08.2008 |
| | | KR100859261B1 | 18.09.2008 |
| | | EP2111695A1 | 28.10.2009 |
| | | KR20100023943A | 04.03.2010 |
| | | KR20100023944A | 04.03.2010 |
| CN101540663A | 23.09.2009 | NONE | |
| CN101127582A | 20.02.2008 | NONE | |

Form PCT/ISA /210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **THEODORE S. RAPPAPORT.** Wireless Communications: Principles and Practice. Prentice Hall PTR